(19) Europäisches Patentamt
European Patent Office
Office européen des brevets

(11) **EP 4 576 811 A1**

(12) **EUROPEAN PATENT APPLICATION**
published in accordance with Art. 153(4) EPC

(43) Date of publication:
**25.06.2025 Bulletin 2025/26**

(21) Application number: **23899551.8**

(22) Date of filing: **22.09.2023**

(51) International Patent Classification (IPC):
**H04Q 11/00** (2006.01)

(52) Cooperative Patent Classification (CPC):
**H04L 12/66; H04Q 11/00**

(86) International application number:
**PCT/CN2023/120659**

(87) International publication number:
**WO 2024/119968 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.12.2022 CN 202211559572**

(71) Applicant: **Huawei Technologies Co., Ltd.
Shenzhen, Guangdong 518129 (CN)**

(72) Inventors:
• **LI, Borui
  Shenzhen, Guangdong 518129 (CN)**
• **ZHENG, Gang
  Shenzhen, Guangdong 518129 (CN)**
• **ZHENG, Zongzhao
  Shenzhen, Guangdong 518129 (CN)**

(74) Representative: **Maiwald GmbH
Engineering
Elisenhof
Elisenstrasse 3
80335 München (DE)**

(54) **OPTICAL SPLITTER, SLAVE GATEWAY, COMMUNICATION METHOD AND OPTICAL COMMUNICATION SYSTEM**

(57)     This application provides an optical splitter, applied to the field of optical communication. The optical splitter includes an optical splitting unit, a control unit, and a photoelectric composite unit. The optical splitting unit is configured to receive a downlink optical signal from a master gateway, and transmit N downlink optical sub-signals to the photoelectric composite unit. The photoelectric composite unit includes N ports. The N ports are configured to connect to N slave gateways through photoelectric composite cables. The photoelectric composite unit is configured to output the N downlink optical sub-signals through the N ports respectively. The N ports are in one-to-one correspondence with the N downlink optical sub-signals. The control unit is configured to generate N first electrical signals. The N first electrical signals are in one-to-one correspondence with the N ports. The N first electrical signals are used to transmit information to the N slave gateways respectively. **In** this application, the information is transmitted to the slave gateway by using the first electrical signal, to improve network operation and maintenance efficiency.

FIG. 1

**Description**

This application claims priority to Chinese Patent Application No. CN202211559572.4, filed with the China National Intellectual Property Administration on December 6, 2022 and entitled "OPTICAL SPLITTER, SLAVE GATEWAY, COMMUNICATION METHOD, AND OPTICAL COMMUNICATION SYSTEM", which is incorporated herein by reference in its entirety.

**TECHNICAL FIELD**

This application relates to the field of wireless communication, and in particular, to an optical splitter, a slave gateway, a communication method, and an optical communication system.

**BACKGROUND**

A passive optical network (passive optical network, PON) system includes an optical line terminal (optical line terminal, OLT), an optical distribution network (optical distribution network, ODN), and a plurality of optical network units (optical network units, ONUs). The ODN includes an optical splitter. The optical splitter includes a plurality of output ports. Each output port is connected to one ONU. In an uplink direction, an uplink optical signal from each ONU is converged to the OLT through the optical splitter in a time division manner. In a downlink direction, the OLT distributes a downlink optical signal to all of the ONUs through the optical splitter. Each ONU receives the same downlink optical signal.

During actual application, how to improve operation and maintenance efficiency of the PON system is an urgent problem to be resolved.

**SUMMARY**

This application provides an optical splitter, a slave gateway, a communication method, and an optical communication system, to transmit information to the slave gateway by using a first electrical signal, so as to improve network operation and maintenance efficiency.

A first aspect of this application provides an optical splitter. The optical splitter includes an optical splitting unit, a control unit, and a photoelectric composite unit. The optical splitting unit is configured to receive a downlink optical signal from a master gateway, and transmit N downlink optical sub-signals to the photoelectric composite unit. N is an integer greater than 0. The photoelectric composite unit includes N ports. The N ports are configured to connect to N slave gateways through photoelectric composite cables respectively. The N slave gateways are in one-to-one correspondence with the N ports. The photoelectric composite unit is configured to output the N downlink optical sub-signals through the N ports respectively. The N ports are in one-to-one correspondence with the N downlink optical sub-signals. The control unit is configured to generate N first electrical signals. The N first electrical signals are in one-to-one correspondence with the N ports. The N first electrical signals are used to transmit information to the N slave gateways respectively.

In an optional manner of the first aspect, the control unit is further configured to obtain electrical connection states of the N slave gateways based on the N first electrical signals; and/or the control unit is further configured to obtain optical connection states of the N slave gateways. The electrical connection states and/or the optical connection states are obtained, so that operation, administration and maintenance (operation, administration and maintenance, OAM) performance of an optical communication system can be improved.

In an optional manner of the first aspect, the optical splitter includes a display unit. The display unit is configured to display the optical connection states of the N slave gateways and/or the electrical connection states of the N slave gateways. A user may determine the optical connection state of the N slave gateways and/or the electrical connection state of the N slave gateways by using the display unit. Therefore, in this embodiment of this application, network operation and maintenance experience of the user can be improved.

In an optional manner of the first aspect, the photoelectric composite unit is further configured to output N third electrical signals through the N ports. The N third electrical signals are in one-to-one correspondence with the N ports. The N third electrical signals are used to obtain length information of the photoelectric composite cable. The length information of the photoelectric composite cable is obtained by using the N third electrical signals, so that the length information of the photoelectric composite cable may be displayed in a topology view of the optical communication system, to improve OAM experience.

In an optional manner of the first aspect, the control unit is further configured to receive N fourth electrical signals through the N ports. The N fourth electrical signals are in one-to-one correspondence with the N third electrical signals. The control unit is further configured to obtain the length information of the photoelectric composite cable based on the N third electrical signals and the N fourth electrical signals. During actual application, the slave gateway may alternatively obtain the length information of the photoelectric composite cable based on the third electrical signal. However, the length information obtained in this manner is scattered in the N slave gateways, reducing efficiency of obtaining the length information. Therefore, in this application, the efficiency of obtaining the length information can be improved.

In an optional manner of the first aspect, the optical splitter further includes a power supply unit. The power supply unit is configured to supply power to the N slave gateways through the N ports. The power supply unit may be further configured to supply power to the control unit. The power supply unit is further configured to supply power to the control unit.

In an optional manner of the first aspect, the optical splitter further includes an isolation unit and/or a regulatory unit. The isolation unit is configured to isolate the power supply unit from the control unit. The regulatory unit is located between the control unit and the N ports, and is configured to prevent the control unit from being overloaded. The isolation unit and/or the regulatory unit are/is added, so that stability of the optical splitter can be improved.

A second aspect of this application provides a slave gateway. The slave gateway may also be referred to as a slave gateway device. The slave gateway includes an input port and a control unit. The input port is configured to receive a first electrical signal from an optical splitter, and transmit the first electrical signal to the control unit. The input port is connected to the optical splitter through a photoelectric composite cable. The control unit is configured to obtain information transmitted by using the first electrical signal.

In an optional manner of the second aspect, the control unit is further configured to transmit a second electrical signal to the optical splitter based on the first electrical signal. The second electrical signal is used by the optical splitter to determine an electrical connection state and/or an optical connection state between the optical splitter and the slave gateway.

In an optional manner of the second aspect, the control unit is further configured to determine the electrical connection state and/or the optical connection state between the optical splitter and the slave gateway based on the first electrical signal. The slave gateway further includes a display unit. The display unit is configured to display the electrical connection state and/or the optical connection state. A user may determine the optical connection state and/or the electrical connection state of the slave gateway by using the display unit. Therefore, in this embodiment of this application, user experience can be improved.

In an optional manner of the second aspect, the input port is further configured to receive a third electrical signal from the optical splitter. The control unit is further configured to transmit a fourth electrical signal to the optical splitter based on the third electrical signal. The fourth electrical signal is used to obtain length information of the photoelectric composite cable.

A third aspect of this application provides a communication method. The communication method includes the following steps: An optical splitter transmits N downlink optical sub-signals to N slave gateways through N ports. The N ports are in one-to-one correspondence with the N slave gateways. The N ports are connected to the N slave gateways through photoelectric composite cables. The N slave gateways are in one-to-one correspondence with the N downlink optical sub-signals. N is an integer greater than 0. The optical splitter generates N first electrical signals. The N first electrical signals are in one-to-one correspondence with the N slave gateways. The N first electrical signals are used to transmit information to the N slave gateways respectively.

In an optional manner of the third aspect, the communication method further includes the following step: The optical splitter obtains electrical connection states of the N slave gateways based on the N first electrical signals; and/or the optical splitter obtains optical connection states of the N slave gateways.

In an optional manner of the third aspect, the communication method further includes the following step: The optical splitter displays the optical connection states of the N slave gateways and/or the electrical connection states of the N slave gateways.

In an optional manner of the third aspect, the communication method further includes the following step: The optical splitter outputs N third electrical signals through the N ports. The N third electrical signals are in one-to-one correspondence with the N ports. The N third electrical signals are used to obtain length information of the photoelectric composite cable.

In an optional manner of the third aspect, the communication method further includes the following steps: The optical splitter receives N fourth electrical signals through the N ports. The N fourth electrical signals are in one-to-one correspondence with the N third electrical signals. The optical splitter obtains the length information of the photoelectric composite cable based on the N third electrical signals and the N fourth electrical signals.

A fourth aspect of this application provides a communication method. The communication method includes the following steps: A slave gateway receives a first electrical signal from an optical splitter. The slave gateway is connected to one port of the optical splitter through a photoelectric composite cable. The slave gateway obtains information transmitted by using the first electrical signal.

In an optional manner of the fourth aspect, the communication method further includes the following step: The slave gateway transmits a second electrical signal to the optical splitter. The second electrical signal is used by the optical splitter to determine an electrical connection state and/or an optical connection state between the optical splitter and the slave gateway.

In an optional manner of the fourth aspect, the communication method further includes the following step: The slave gateway determines the electrical connection state and/or the optical connection state between the optical splitter and the slave gateway based on the first electrical signal. The slave gateway displays the electrical connection state and/or the optical connection state of the slave gateway.

In an optional manner of the fourth aspect, the communication method further includes the following steps: The slave gateway receives a third electrical signal from the optical splitter. The slave gateway transmits a fourth electrical signal to the optical splitter based on the third electrical signal. The fourth electrical signal is used to obtain length information of the photoelectric composite cable.

A fifth aspect of this application provides an optical communication system. The optical communication system includes a master gateway, an optical splitter, and N slave gateways. N is an integer greater than 0. The master gateway is connected to the optical splitter through an optical fiber. The master gateway may also be referred to as a master gateway device. The optical splitter includes N ports. The N ports are connected to the N slave gateways through photoelectric composite cables. The N ports are in one-to-one correspondence with the N slave gateways. The optical splitter is configured to receive a downlink optical signal from the master gateway, and output N downlink optical sub-signals through the N ports respectively. The N ports are in one-to-one correspondence with the N downlink optical sub-signals. The optical splitter is further configured to generate N first electrical signals. The N first electrical signals are in one-to-one correspondence with the N ports. The N first electrical signals are used to transmit information to the N slave gateways respectively.

In an optional manner of the fifth aspect, the optical splitter is further configured to obtain electrical connection states of the N slave gateways based on the N first electrical signals; and/or the optical splitter is further configured to obtain optical connection states of the N slave gateways.

In an optional manner of the fifth aspect, the optical splitter is further configured to display the optical connection states of the N slave gateways and/or the electrical connection states of the N slave gateways.

In an optional manner of the fifth aspect, the optical splitter is further configured to output N third electrical signals through the N ports. The N third electrical signals are in one-to-one correspondence with the N ports. The N third electrical signals are used to obtain length information of the photoelectric composite cable.

In an optional manner of the fifth aspect, the N slave gateways are configured to transmit N fourth electrical signals to the optical splitter. The N fourth electrical signals are in one-to-one correspondence with the N third electrical signals. The optical splitter is further configured to obtain the length information of the photoelectric composite cable based on the N third electrical signals and the N fourth electrical signals.

A sixth aspect of this application provides a computer storage medium. The computer storage medium stores instructions, and when the instructions are executed on a computer, the computer is enabled to perform the method according to any one of the third aspect or the implementations of the third aspect; or the computer is enabled to perform the method according to any one of the fourth aspect or the implementations of the fourth aspect.

A seventh aspect of this application provides a computer program product. When the computer program product is executed on a computer, the computer is enabled to perform the method according to any one of the third aspect or the implementations of the third aspect; or the computer is enabled to perform the method according to any one of the fourth aspect or the implementations of the fourth aspect.

## BRIEF DESCRIPTION OF DRAWINGS

FIG. 1 is a first schematic structural diagram of an optical communication system according to an embodiment of this application;

FIG. 2 is a second schematic structural diagram of an optical communication system according to an embodiment of this application;

FIG. 3 is a third schematic structural diagram of an optical communication system according to an embodiment of this application;

FIG. 4 is a first schematic structural diagram of an optical splitter according to an embodiment of this application;

FIG. 5 is a second schematic structural diagram of an optical splitter according to an embodiment of this application;

FIG. 6 is a third schematic structural diagram of an optical splitter according to an embodiment of this application;

FIG. 7 is a first schematic diagram of a waveform of a first electrical signal according to an embodiment of this application;

FIG. 8 is a first schematic structural diagram of a control unit according to an embodiment of this application;

FIG. 9 is a second schematic diagram of a waveform of a first electrical signal according to an embodiment of this application;

FIG. 10 is a third schematic diagram of a waveform of a first electrical signal according to an embodiment of this application;

FIG. 11 is a fourth schematic structural diagram of an optical splitter according to an embodiment of this application;

FIG. 12 is a second schematic structural diagram of a control unit according to an embodiment of this application;

FIG. 13 is a fifth schematic structural diagram of an optical splitter according to an embodiment of this application;

FIG. 14 is a sixth schematic structural diagram of an optical splitter according to an embodiment of this application;

FIG. 15 is a third schematic structural diagram of a control unit according to an embodiment of this application;

FIG. 16 is a first schematic structural diagram of a slave gateway according to an embodiment of this application;

FIG. 17 is a second schematic structural diagram of a slave gateway according to an embodiment of this application;

FIG. 18 is a third schematic structural diagram of a slave gateway according to an embodiment of this application;

FIG. 19 is a fourth schematic structural diagram of a slave gateway according to an embodiment of this application;

FIG. 20 is a first schematic structural diagram of a control unit according to an embodiment of this application;

FIG. 21 is a second schematic structural diagram of a control unit according to an embodiment of this application;

FIG. 22 is a fifth schematic structural diagram of a slave gateway according to an embodiment of this application;

FIG. 23 is a first schematic structural diagram of a detection method according to an embodiment of this application; and

FIG. 24 is a second schematic structural diagram of a detection method according to an embodiment of this application.

## DESCRIPTION OF EMBODIMENTS

This application provides an optical splitter, a slave gateway, a communication method, and an optical communication system, to transmit information to the slave gateway by using a first electrical signal, so as to improve operation and maintenance efficiency of a network. It should be understood that "first", "second", and the like used in this application are merely used for a purpose of distinguishing for description, and shall not be understood as an indication or implication of relative importance or an indication or implication of a sequence. In addition, for brevity and clarity, reference numerals and/or letters are repeated in a plurality of accompanying drawings of this application. Repetition does not indicate that there is a strict restrictive relationship between various embodiments and/or configurations.

In a passive optical network (passive optical network, PON), an optical line terminal (optical line terminal, OLT) distributes a downlink optical signal to all optical network units (optical network units, ONUs) through an optical splitter. Each ONU receives the same downlink optical signal. During actual application, how to improve operation and maintenance efficiency of a PON system is an urgent problem to be resolved.

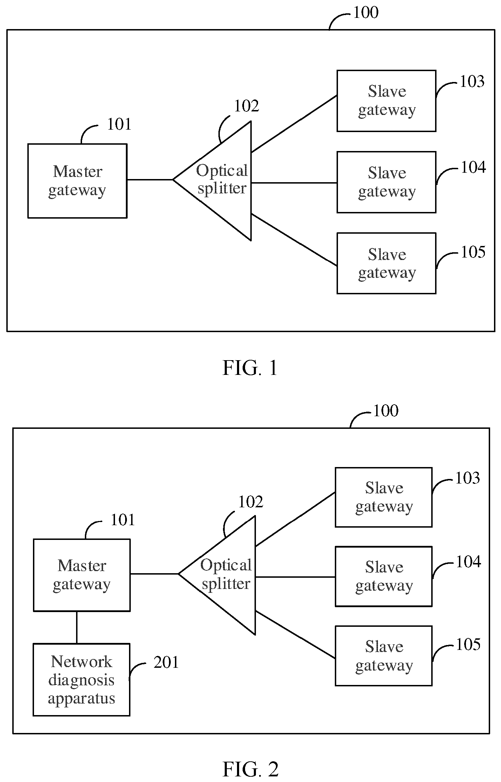

In view of this, this application provides an optical communication system. FIG. 1 is a first schematic structural diagram of an optical communication system according to an embodiment of this application. As shown in FIG. 1, the optical communication system 100 includes a master gateway 101, an optical splitter 102, and N slave gateways. N is an integer greater than 0. In an example of FIG. 1, N is equal to 3. The N slave gateways include slave gateways 103 to 105. The master gateway may also be referred to as a master gateway device. The master gateway 101 may be an optical line terminal (optical line terminal, OLT). The master gateway 101 is connected to the optical splitter 102 through an optical fiber. The slave gateway may also be referred to as a slave gateway device. The slave gateway may be an ONU, an optical network terminal (optical network terminal, ONT), an access point (access point, AP), or the like. The optical splitter 102 includes N ports. Each port is connected to one slave gateway through one or more photoelectric composite cables. For ease of description, an example in which each port is connected to one slave gateway through one photoelectric composite cable is used for description subsequently. The N ports are in one-to-one correspondence with the N slave gateways. The N ports are in one-to-one correspondence with N photoelectric composite cables.

The optical splitter 102 may be configured to transmit both an uplink optical signal and a downlink optical signal. In a downlink direction, the master gateway 101 transmits a downlink optical signal to the optical splitter 102. The optical splitter 102 obtains N downlink optical sub-signals based on the downlink optical signal. For example, the optical splitter 102 performs power splitting on the downlink optical signal to obtain the N downlink optical sub-signals. For another example, the optical splitter 102 performs power splitting on the downlink optical signal to obtain N+1 downlink optical sub-signals. The optical splitter 102 further includes a cascading port. The cascading port is connected to another optical splitter. Alternatively, the optical splitter 102 further includes a port that is not connected to the slave gateway. The N downlink optical sub-signals are N optical sub-signals in the N+1 downlink optical sub-signals. The optical splitter 102 outputs the N downlink optical sub-signals through the N ports. Each port is configured to output one downlink optical sub-signal. Each slave gateway is configured to receive one downlink optical sub-signal. The N downlink optical sub-signals are in one-to-one correspondence with the N slave gateways. In an uplink direction, an uplink optical sub-signal from each slave gateway is coupled to the master gateway 101 through the optical splitter 102 in a time division manner.

The optical splitter 102 may be further configured to generate N first electrical signals. The N first electrical signals are in one-to-one correspondence with the N ports. The optical splitter 102 is configured to transmit information to the N slave gateways by using the N first electrical signals. For example, the optical splitter 102 may be configured to transmit the information by using frequencies of the N first electrical signals, bit sequences carried in the N first electrical signals, or power disturbance information generated by using the N first electrical signals for the N downlink optical sub-signals. The transmitted information may be operation and maintenance information. In a subsequent example, an example in which the transmitted operation and maintenance information is used to obtain a first correspondence between the N ports and the N slave gateways is used for description. Table 1 is an example of the first correspondence provided in this embodiment of this application. "001 (port 1)" corresponds to the slave gateway 103, representing that the slave gateway 103 is connected to the port 1 of the optical splitter 102. An identifier of the port 1 is "001".

**Table 1**

| Identifier of a port | Identifier of a slave gateway |
|---|---|
| 001 (port 1) | Slave gateway 103 |
| 010 (port 2) | Slave gateway 104 |
| 011 (port 3) | Slave gateway 105 |

In this embodiment of this application, the optical splitter 102 may transmit the information to the slave gateway by using the N first electrical signals. Therefore, in this embodiment of this application, operation and maintenance efficiency of a network can be improved.

It can be learned from the foregoing descriptions of FIG. 1 that the N first electrical signals may be used to obtain the first correspondence between the N ports and the N slave gateways. During actual application, the N slave gateways and/or another device may obtain the first correspondence based on the frequencies of the N first electrical signals, the bit sequences carried in the N first electrical signals, or the power disturbance information generated by using the N first electrical signals for the N downlink optical sub-signals. Descriptions are separately provided below. The another device may be the optical splitter 102 or the master gateway 101.

In a first manner, the N slave gateways and/or the another device obtain/obtains the first correspondence based on the frequencies of the N first electrical signals. The optical splitter 102 is further configured to output N first electrical signals with different frequencies. Specifically, the optical splitter 102 is configured to generate the N first electrical signals with the different frequencies. For example, the N first electrical signals include an electrical signal 1 and an electrical signal 2. A frequency range of the electrical signal 1 is from 0 thousand hertz (thousand hertz, kHz) to 400 thousand hertz. A frequency range of the electrical signal 2 is from 0 kHz to 800 kHz. The optical splitter 102 outputs the N first electrical signals through the N ports. Each port is configured to output one first electrical signal. Each slave gateway is configured to receive one first electrical signal. The N first electrical signals are in one-to-one correspondence with the N slave gateways.

For ease of description, the slave gateway 104 in the N slave gateways is used as an example for description. The slave gateway 104 is configured to receive the first electrical signal from the optical splitter 102. The slave gateway 104 is further configured to measure the frequency of the first electrical signal. For example, the slave gateway 104 is configured to generate oscillatory electrical signals with different frequencies, and perform correlation operations based on the oscillatory electrical signals with the different frequencies and the first electrical signal. When an operation result obtained by using an oscillatory electrical signal with a frequency 1 exceeds a threshold, the slave gateway 104 determines that the frequency of the first electrical signal is the frequency 1. The frequency of the first electrical signal may be a center frequency, an upper frequency limit, or a lower frequency limit of the first electrical signal. The slave gateway 104 is further configured to obtain a second correspondence. The second correspondence includes a mapping relationship between N frequencies of the N first electrical signals and the N ports. For example, Table 2 is an example of the second correspondence provided in this embodiment of this application.

**Table 2**

| Identifier of a port | Frequency of a first electrical signal |
|---|---|
| 001 (port 1) | Frequency 1 |
| 010 (port 2) | Frequency 2 |
| 011 (port 3) | Frequency 3 |

The slave gateway 104 is configured to obtain a sub-correspondence based on the second correspondence and the frequency of the first electrical signal. For example, the frequency of the first electrical signal is a frequency 2. In this case, the slave gateway 104 may determine that the slave gateway 104 is connected to a port 2 of the optical splitter 102. The slave gateway 104 is configured to establish a correspondence between an identifier of the port 2 and an identifier of the slave gateway 104, to obtain the sub-correspondence. Similarly, another slave gateway may also obtain the sub-correspondence according to the foregoing method. A combination of N sub-correspondences is the first correspondence.

It should be understood that the another device may be configured to obtain the first correspondence based on the frequencies of the N first electrical signals. The another device receives a correspondence between the frequency of the first electrical signal and the identifier of the slave gateway 104 from the slave gateway 104. The another device may obtain the second correspondence. For descriptions of the second correspondence, refer to the foregoing descriptions of Table 2. The another device obtains the sub-correspondence based on the second correspondence, the frequency of the first electrical signal, and the identifier of the slave gateway 104. The another device may obtain the N sub-correspondences (that is, the first correspondence) according to a similar method. The N sub-correspondences are in one-to-one correspondence with the N slave gateways.

In a second manner, the N slave gateways and/or the another device obtain/obtains the first correspondence based on the bit sequences carried in the N first electrical signals. The optical splitter 102 is configured to output the N first electrical signals that carry different bit sequences. Specifically, the optical splitter 102 is configured to generate the N first electrical signals that carry the different bit sequences. The optical splitter 102 is configured to output the N first electrical signals through the N ports. Each port is configured to output one first electrical signal. Each slave gateway is configured to receive one first electrical signal. The N first electrical signals are in one-to-one correspondence with the N slave gateways. The bit sequence carried in each first electrical signal may include an identifier or a mapping identifier of a port corresponding to the first electrical signal. Descriptions are separately provided below.

When a first bit sequence carried in each first electrical signal includes the identifier of the port corresponding to the first electrical signal, the N slave gateways may obtain the first correspondence based on the identifier of the port. For ease of description, the slave gateway 104 in the N slave gateways is used as an example for description. The slave gateway 104 is configured to receive the first electrical signal from the optical splitter 102, and obtain the first bit sequence carried in the first electrical signal. The first bit sequence includes the identifier of the port corresponding to the first electrical signal, for example, "010". The slave gateway 104 obtains the sub-correspondence based on the identifier of the port. The sub-correspondence includes a correspondence between the identifier of the port and an identifier of the slave gateway 104. Similarly, another slave gateway may also obtain the sub-correspondence according to the foregoing method.

When a first bit sequence carried in each first electrical signal includes the mapping identifier of the port corresponding to the first electrical signal, the N slave gateways may obtain the first correspondence based on the N first electrical signals and a second correspondence. The second correspondence includes a correspondence between the mapping identifiers of the N ports carried in the N first electrical signals and the identifiers of the N ports. For example, Table 3 is an example of the second correspondence provided in this embodiment of this application. For ease of description, the slave gateway 104 in the N slave gateways is used as an example for description. The slave gateway 104 is configured to receive the first electrical signal from the optical splitter 102, and obtain the first bit sequence carried in the first electrical signal. The first bit sequence includes the mapping identifier of the port corresponding to the first electrical signal, for example, "01". The slave gateway 104 may determine, based on Table 2, that the slave gateway 104 is connected to a port 2 of the optical splitter 102. The slave gateway 104 is configured to establish a correspondence between the port 2 and an identifier of the slave gateway 104, to obtain the sub-correspondence. Similarly, another slave gateway may also obtain the sub-correspondence according to the foregoing method.

**Table 3**

| Identifier of a port | Mapping identifier of the port |
|---|---|
| 001 (port 1) | 00 |
| 010 (port 2) | 01 |
| 011 (port 3) | 10 |

It should be understood that, when the first bit sequence carried in each first electrical signal includes the mapping identifier of the port corresponding to the first electrical signal, the slave gateway 104 may be configured to send the mapping identifier of the port and the identifier of the slave gateway 104 to the another device. The another device is configured to obtain the sub-correspondence based on the mapping identifier of the port, the identifier of the gateway 104, and the second correspondence. The another device may obtain the N sub-correspondences according to a similar method. The N sub-correspondences are in one-to-one correspondence with the N slave gateways.

In a third manner, the N slave gateways and/or the another device obtain/obtains the first correspondence based on the power disturbance information generated by using the N first electrical signals for the N downlink optical sub-signals. The optical splitter 102 is configured to generate N first electrical signals with different powers, and apply different power disturbances to the N downlink optical sub-signals based on the N first electrical signals. For example, an optical fiber branch of the optical splitter 102 after splitting includes an outer cladding made of a special material. When being transmitted in the optical fiber branch, the downlink optical sub-signal is subject to an electro-optic or thermo-optic effect, resulting in power leakage. The N first electrical signals are in one-to-one correspondence with the N downlink optical sub-signals. The optical splitter 102 is configured to output, through the N ports, the N downlink optical sub-signals to which the power disturbances are applied.

The N slave gateways are configured to receive the N downlink optical sub-signals. For ease of description, the slave gateway 104 in the N slave gateways is used as an example for description. The slave gateway 104 is configured to receive one downlink optical sub-signal from the optical splitter 102. The slave gateway 104 is further configured to measure a power of the downlink optical sub-signal, to obtain the power disturbance information. The power disturbance information includes a disturbance intensity or a disturbance frequency of the downlink optical sub-signal. The disturbance intensity is a difference between a normal power value and a current power value. The disturbance frequency is a fluctuation frequency of the current power value. The slave gateway 104 is further configured to obtain a second correspondence. The second correspondence includes a mapping relationship between N pieces of power disturbance information generated by using the N first electrical signals and the N ports. For example, Table 4 is an example of the second correspondence provided in this embodiment of this application.

**Table 4**

| Identifier of a port | Power disturbance information |
|---|---|
| 001 (port 1) | Disturbance intensity 1 |
| 010 (port 2) | Disturbance intensity 2 |
| 011 (port 3) | Disturbance intensity 3 |

The slave gateway 104 is configured to obtain the sub-correspondence based on the second correspondence and the power disturbance information. For example, the power disturbance information is a disturbance intensity 2. In this case, the slave gateway 104 may determine that the slave gateway 104 is connected to a port 2 of the optical splitter 102. The slave gateway 104 is configured to establish a correspondence between the port 2 and an identifier of the slave gateway 104, to obtain the sub-correspondence. Similarly, another slave gateway may also obtain the sub-correspondence according to the foregoing method.

It should be understood that the another device may be configured to obtain the first correspondence based on the N pieces of power disturbance information. The another device is configured to receive a correspondence between the power disturbance information and the identifier of the slave gateway 104 from the slave gateway 104. The another device may obtain the second correspondence. For descriptions of the second correspondence, refer to the foregoing descriptions of Table 4. The another device obtains the sub-correspondence based on the second correspondence, the power disturbance information, and the identifier of the slave gateway 104. The another device may obtain N sub-correspondences (that is, the first correspondence) according to a similar method. The N sub-correspondences are in one-to-one correspondence with the N slave gateways.

After obtaining the sub-correspondence, the slave gateway 104 may be configured to transmit the sub-correspondence to the another device. Similarly, the another slave gateway may also transmit the sub-correspondence to the another device. Therefore, the another device may combine the N sub-correspondences to obtain the first correspondence. Based on a type of the another device, the slave gateway 104 may transmit the sub-correspondence to the another device in different manners. Descriptions are separately provided below.

When the another device is the optical splitter 102, the slave gateway 104 may transmit the sub-correspondence to the optical splitter 102 by using an electrical signal or a radio signal. The slave gateway 104 is connected to the optical splitter 102 through a photoelectric composite cable. Therefore, the slave gateway 104 may transmit a second electrical signal to the optical splitter 102 through the photoelectric composite cable. The second electrical signal carries the sub-correspondence. Alternatively, a wireless module is disposed in each of the slave gateway 104 and the optical splitter 102. The slave gateway 104 transmits the radio signal to the optical splitter 102 through the wireless module. The radio signal carries the sub-correspondence.

When the another device is the master gateway 101, the slave gateway 104 may transmit the sub-correspondence to the master gateway 101 by using an optical signal, a radio signal, or an electrical signal. The master gateway 101 is connected to the slave gateway 104 through an optical fiber. The slave gateway 104 may be configured to transmit an uplink optical sub-signal to the mater gateway 101 through the optical fiber. The uplink optical sub-signal carries the sub-correspondence. Alternatively, a wireless module is disposed in each of the slave gateway 104 and the master gateway 101. The slave gateway 104 is configured to transmit the radio signal to the master gateway 101 through the wireless module. The radio signal carries the sub-correspondence. Alternatively, the optical fiber between the master gateway 101 and the optical splitter 102 may be a photoelectric composite cable. In this case, the slave gateway 104 may also be configured to transmit the electrical signal to the master gateway 101 through the optical splitter 102. The electrical signal carries the sub-correspondence.

In the foregoing three manners of obtaining the first correspondence, the N first electrical signals or the N downlink optical sub-signals carry features of the ports corresponding to the N first electrical signals or the N downlink optical sub-signals. Specifically, in the first manner, the N first electrical signals carry frequency features. In the second manner, the N first electrical signals carry bit sequence features. In the third manner, the N downlink optical sub-signals carry power features. During actual application, the N first electrical signals or the N downlink optical sub-signals may not carry the features of the ports corresponding to the N first electrical signals or the N downlink optical sub-signals. The foregoing second manner is used as an example for description below.

The optical splitter 102 is configured to transmit, to the N slave gateways, N first electrical signals that carry a same bit sequence, and is configured to output the N first electrical signals through the N ports. Each port is configured to output one first electrical signal. Each slave gateway is configured to receive one first electrical signal. The N first electrical signals are in one-to-one correspondence with the N slave gateways. The first bit sequence carried in each first electrical signal includes a target indication. The N slave gateways are configured to receive the N first electrical signals. For ease of description, the slave gateway 104 in the N slave gateways is used as an example for description. The slave gateway 104 is configured to receive the first electrical signal from the optical splitter 102, and obtain the first bit sequence carried in the first electrical signal. The first bit sequence includes the target indication. The slave gateway 104 transmits the second electrical signal to the optical splitter 102 based on the target indication. The second electrical signal includes the identifier of the slave gateway 104. The optical splitter 102 is configured to obtain the sub-correspondence based on the second electrical signal. For example, the optical splitter 102 receives the second electrical signal through the port 2, where the second electrical signal includes the identifier of the slave gateway 104. The optical splitter 102 determines that the slave gateway 104 is connected to the port 2. The optical splitter 102 may obtain the N sub-correspondences (that is, the first correspondence) based on the N second electrical signals and according to a similar method. The N second electrical signals are in one-to-one correspondence with the N slave gateways. The N sub-correspondences are in one-to-one correspondence with the N slave gateways.

To improve operation and maintenance efficiency, the optical communication system 100 may further include a network diagnosis apparatus. The network diagnosis apparatus may be a network management device or a mobile terminal. The network diagnosis apparatus is configured to obtain the first correspondence from the another device or the N slave gateways, and display the first correspondence. FIG. 2 is a second schematic structural diagram of an optical communication system according to an embodiment of this application. As shown in FIG. 2, based on FIG. 1, the optical communication system 100 further includes a network diagnosis apparatus 201. The network diagnosis apparatus 201 is configured to obtain the first correspondence from the master gateway 101, and display the first correspondence.

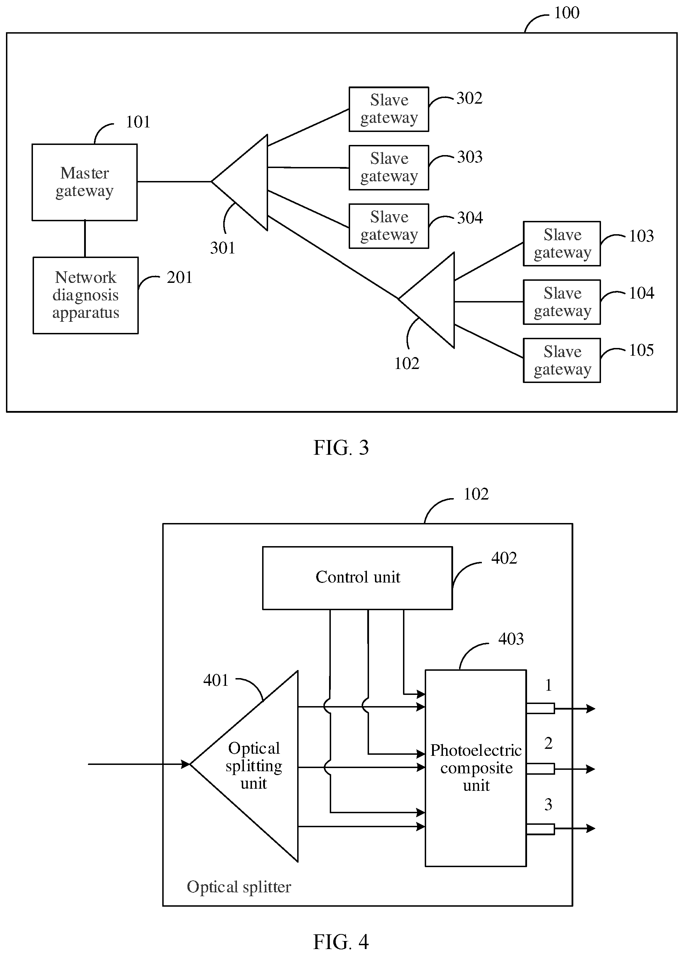

It can be learned from the foregoing descriptions of FIG. 1 that the master gateway 101 is connected to the optical splitter 102 through the optical fiber. During actual application, the optical splitter 102 may be directly connected to the master gateway 101 through the optical fiber, or may be indirectly connected to the master gateway 101 through the optical fiber. For example, another optical splitter is further included between the master gateway 101 and the optical splitter 102. FIG. 3 is a third schematic structural diagram of an optical communication system according to an embodiment of this application. As shown in FIG. 3, based on FIG. 2, the optical communication system 100 further includes an optical splitter 301 and slave gateways 302 to 304. The optical splitter 301 is connected to the master gateway 101 through an optical fiber. The optical splitter 301 is connected to the slave gateways 302 to 304 through photoelectric composite cables. The optical splitter 102 is connected to a cascading port of the optical splitter 301 through an optical fiber.

To improve operation and maintenance efficiency, a topology level of the optical splitter 102 may be determined by using the N first electrical signals. Specifically, the N first electrical signals carry cascading identifiers. The N slave gateways or the another device determines the topology level of the optical splitter 102 based on the cascading identifiers. The cascading identifier may be the bit sequence carried in the first electrical signal, the frequency of the first electrical signal, or the power disturbance information generated by using the first electrical signal for the downlink optical sub-signal. An example in which the cascading identifier is the bit sequence or the frequency is used for description below.

The cascading identifier may be the frequency of the first electrical signal. For example, the N first electrical signals include electrical signals 1 to 3. A frequency of the electrical signal 1 is 400 kHz. A frequency of the electrical signal 2 is 800 kHz. A frequency of the electrical signal 3 is 1200 kHz. In this case, a remainder obtained by dividing the frequency of the first electrical signal by 100 is 0. The remainder "0" represents that the topology level of the optical splitter 102 is a first level, that is, the optical splitter 102 is directly connected to the master gateway 101. For another example, a frequency of the electrical signal 1 is 450 kHz. A frequency of the electrical signal 2 is 850 kHz. A frequency of the electrical signal 3 is 1250 kHz. In this case, a remainder obtained by dividing the upper frequency limit of the first electrical signal by 100 is 50. The remainder "50" represents that the topology level of the optical splitter 102 is a second level, that is, another optical splitter is further included between the optical splitter 102 and the master gateway 101. The slave gateway 104 is configured to obtain the frequency of the first electrical signal. The slave gateway 104 may be further configured to transmit the frequency of the first electrical signal to the another device. The slave gateway 104 or the another device is configured to determine the topology level of the optical splitter 102 based on the frequency of the first electrical signal.

The cascading identifier may be the bit sequence carried in the first electrical signal. The first bit sequence carried in the first electrical signal includes a first field and a second field. The first field includes an identifier of a port corresponding to the first field. The second field carries the cascading identifier. For example, each first electrical signal carries a cascading identifier "00". "00" represents that the topology level of the optical splitter 102 is a first level, that is, the optical splitter 102 is directly connected to the master gateway 101. For another example, each first electrical signal carries a cascading identifier "01". "01" represents that the topology level of the optical splitter 102 is a second level, that is, another optical splitter is further included between the optical splitter 102 and the master gateway 101. The slave gateway 104 is configured to obtain the cascading identifier carried in the first electrical signal. The slave gateway 104 may be further configured to transmit the cascading identifier to the another device. The slave gateway 104 or the another device is configured to determine the topology level of the optical splitter 102 based on the cascading identifier.

The optical splitter 102 may receive a range control signal from the master gateway 101 or the network management device. The optical splitter 102 is configured to transmit, to the N slave gateways based on the range control signal, the N first electrical signals that carry the cascading identifiers. For example, the range control signal includes a first-level identifier. The optical splitter 102 generates, based on the first-level identifier, the first electrical signal that carries the cascading identifier "00". For another example, the range control signal includes a second-level identifier. The optical splitter 102 generates, based on the second-level identifier, the first electrical signal that carries the cascading identifier "01".

It should be understood that the topology level of the optical splitter 102 corresponds to a topology level of the N slave gateways. For example, when the topology level of the optical splitter 102 is the second level, it represents that the topology level of the N slave gateways is also the second level, that is, the N slave gateways are connected to the optical splitter at the second level. Therefore, the N slave gateways or the another device may determine the topology level of the N slave gateways by determining the topology level of the optical splitter 102.

During actual application, the network diagnosis apparatus 201 may be configured to obtain information about the topology level of the N slave gateways from the another device or the N slave gateways. For example, Table 5 is an example of topology information provided in this embodiment of this application. The topology information includes the first correspondence and the information about the topology level of the N slave gateways. The network diagnosis apparatus 201 may be configured to obtain a topology view of the optical communication system 100 by using the topology information. To improve operation and maintenance efficiency, the network diagnosis apparatus 201 may be configured to display the topology information or the topology view.

Table 5

| Identifier of a port | Identifier of a slave gateway | Topology level |
|---|---|---|
| 001 (port 1) | Slave gateway 103 | First level |
| 010 (port 2) | Slave gateway 104 | First level |
| 011 (port 3) | Slave gateway 105 | First level |

During actual application, the N first electrical signals may be further used to obtain electrical connection states of the N slave gateways. For example, when the slave gateway 104 does not receive the first electrical signal within agreed time, the slave gateway 104 determines that an electrical connection state between the slave gateway 104 and the master gateway 101 is disconnected. When the slave gateway 104 receives the first electrical signal within agreed time, the slave gateway 104 determines that an electrical connection state between the slave gateway 104 and the master gateway 101 is normal. The slave gateway 104 may be configured to transmit the electrical connection state between the gateway 104 and the master gateway 101 to the another device. The network diagnosis apparatus 201 is configured to receive the electrical connection state between the slave gateway 104 and the master gateway 101 from the slave gateway 104 or the another device. Similarly, the network diagnosis apparatus 201 may be configured to obtain N electrical connection states between the N slave gateways and the optical splitter 102. The N electrical connection states are in one-to-one correspondence with the N slave gateways. To improve operation and maintenance efficiency, the network diagnosis apparatus 201 may be further configured to display the N electrical connection states in the topology information or the topology view.

During actual application, the N first electrical signals may be further used to obtain optical connection states of the N slave gateways. For example, the first electrical signal received by the slave gateway 104 includes an optical state field. Content in the optical state field represents an optical connection state between the slave gateway 104 and the master gateway 101. The slave gateway 104 may be configured to transmit the optical connection state between the gateway 104 and the master gateway 101 to the another device. The network diagnosis apparatus 201 is configured to receive the optical connection state between the slave gateway 104 and the master gateway 101 from the slave gateway 104 or the another device. Similarly, the network diagnosis apparatus 201 may obtain N optical connection states between the N slave gateways and the optical splitter 102. The N optical connection states are in one-to-one correspondence with the N slave gateways. To improve operation and maintenance efficiency, the network diagnosis apparatus 201 may be further configured to display the N optical connection states in the topology information or the topology view.

The optical splitter 102 may also be configured to obtain the N electrical connection states. For example, the optical splitter 102 is configured to obtain the N electrical connection states from the network diagnosis apparatus 201. For another example, the optical splitter 102 determines the N electrical connection states based on the N second electrical signals.

To improve user experience, the optical splitter 102 may be configured to display the N electrical connection states. For example, N light emitting diode (light emitting diode, LED) lamps are disposed on the optical splitter 102. The N LED lamps are in one-to-one correspondence with the N slave gateways. The optical splitter 102 displays the N electrical connection states by using the N LED lamps. Each LED lamp is configured to display an electrical connection state of one slave gateway. The N electrical connection states are in one-to-one correspondence with the N LED lamps.

To improve user experience, the optical splitter 102 may be further configured to display the N optical connection states. For example, the N optical connection states are in one-to-one correspondence with the N LED lamps. Any one of the LED lamps has four states. The first state represents that both the electrical connection state and the optical connection state of the slave gateway are normal. The second state represents that the electrical connection state of the slave gateway is normal, and the optical connection state of the slave gateway is disconnected or damaged. The third state represents that the electrical connection state of the slave gateway is disconnected, and the optical connection state of the slave gateway is normal. The fourth state represents that the electrical connection state of the slave gateway is disconnected, and the optical connection state of the slave gateway is disconnected or damaged.

It can be learned from the foregoing descriptions of FIG. 1 that the optical splitter 102 is connected to the slave gateway 104 through the photoelectric composite cable. The optical splitter 102 or the slave gateway 104 may be further configured to obtain length information of the photoelectric composite cable. An example in which the optical splitter 102 is configured to obtain the length information of the photoelectric composite cable is used for description below.

The optical splitter 102 is configured to generate N third electrical signals. The N third electrical signals are in one-to-one correspondence with the N slave gateways. In this case, one of the N third electrical signals is used as an example. The optical splitter 102 is configured to transmit the third electrical signal to the slave gateway 104 at a first moment t1. The optical splitter 102 is configured to record the first moment t1. The slave gateway 104 is configured to receive the third electrical signal at a second moment t2, and return, based on the third electrical signal, a fourth electrical signal to the optical splitter 102 at a third moment t3. The fourth electrical signal carries difference information between the second moment t2 and the third moment t3. The optical splitter 102 is configured to receive the fourth electrical signal at a fourth moment t4. The optical splitter 102 is configured to record the fourth moment t4. The optical splitter 102 is configured to calculate the length information of the photoelectric composite cable based on the following formula:

$$d = \frac{t4 - t1 - (t3 - t2)}{2 \times b}.$$

The length information of the photoelectric composite cable is d. b is a transmission speed of the electrical signal. The optical splitter 102 may obtain length information of the N photoelectric composite cables according to a similar method. The length information of the N photoelectric composite cables is in one-to-one correspondence with the N slave gateways. Similarly, a transmission sequence of the third electrical signal and the fourth electrical signal is changed, so that the slave gateway 104 may obtain the length information of the photoelectric composite cable based on the third electrical signal and the fourth electrical signal.

It should be understood that, during actual application, the third electrical signal may be the foregoing first electrical signal. The fourth electrical signal may be the foregoing second electrical signal. In this case, the optical splitter 102 is configured to transmit the first electrical signal to the slave gateway 104 at the first moment t1. The optical splitter 102 is configured to receive the second electrical signal from the slave gateway 104 at the fourth moment t4. The second electrical signal may carry both the sub-correspondence and the difference information between the second moment t2 and the third moment t3.

It can be learned from the foregoing descriptions of FIG. 1 that the optical splitter 102 is connected to the slave gateway 104 through the photoelectric composite cable. The optical splitter 102 is connected to the master gateway 101 through the optical fiber. Therefore, the master gateway 101 or the slave gateway 104 may obtain transmission length information between the master gateway 101 and the slave gateway 104 according to a method similar to the foregoing method. For example, the master gateway 101 is configured to transmit a downlink optical signal to the slave gateway 104 at the first moment t1. The master gateway 101 is configured to record the first moment t1. The slave gateway 104 is configured to receive the downlink optical sub-signal at the second moment t2, and return, based on the downlink optical sub-signal, an uplink optical sub-signal to the master gateway 101 at the third moment t3. The uplink optical sub-signal carries the difference information between the second moment t2 and the third moment t3. The master gateway 101 is configured to receive the uplink optical sub-signal at the fourth moment t4. The master gateway 101 is configured to record the fourth moment t4. The master gateway 101 is configured to calculate the transmission length information based on the foregoing formula. The transmission length information represents a distance between the master gateway 101 and the slave gateway 104. The transmission length information includes length information of the optical fiber and the length information of the photoelectric composite cable. The master gateway 101 may be configured to obtain N pieces of transmission length information according to a similar method. The N pieces of transmission length information are in one-to-one correspondence with the N slave gateways.

The master gateway 101 may be configured to obtain the length information of the N photoelectric composite cables from the optical splitter 102, and obtain the length information of the optical fiber based on the N pieces of transmission length information and the length information of the N photoelectric composite cables. For example, the N pieces of transmission length information include a transmission length m1. The transmission length m1 represents the distance between the master gateway 101 and the slave gateway 104. The length information of the N photoelectric composite cables includes a length d1. The length d1 represents a distance between the optical splitter 102 and the slave gateway 104. The length information of the optical fiber is equal to a difference between m1 and d1.

During actual application, the network diagnosis apparatus 201 may be configured to obtain the length information of the N photoelectric composite cables and the length information of the optical fiber from the master gateway 101. To improve operation and maintenance efficiency, the network diagnosis apparatus 201 may be configured to display the length information of the N photoelectric composite cables and the length information of the optical fiber in the topology information or the topology view.

It should be understood that FIG. 1 to FIG. 3 are merely several schematic structural diagrams of the optical communication system 100 according to embodiments of this application. During actual application, a person skilled in the art may adaptively modify a structure of the optical communication system 100 based on a requirement. For example, in FIG. 1, the master gateway 101 is connected to the optical splitter 102 through the photoelectric composite cable. The optical splitter 102 may be configured to transmit the electrical signal to the master gateway 101. For another example, in FIG. 3, the optical splitter 102 further includes the cascading port. The cascading port is configured to connect to the another optical splitter.

The foregoing describes the optical communication system provided in embodiments of this application. The following describes the optical splitter 102 provided in embodiments of this application. FIG. 4 is a first schematic structural diagram of an optical splitter according to an embodiment of this application. As shown in FIG. 4, the optical splitter 102 includes an optical splitting unit 401, a control unit 402, and a photoelectric composite unit 403. The following describes a function of each unit in the optical splitter 102.

The optical splitting unit 401 may be a power splitter, a wavelength demultiplexer, or a wavelength selective switch. The optical splitting unit 401 is configured to receive a downlink optical signal from a master gateway, and obtain N downlink optical sub-signals based on the downlink optical signal. For example, the optical splitting unit 401 is configured to perform power splitting on the downlink optical signal to obtain the N downlink optical sub-signals. In FIG. 4, N is equal to 3. In a subsequent example, an example in which N is equal to 3 is used for description.

The control unit 402 may be a microcontroller unit (microcontroller unit, MCU), a programmable logic device (programmable logic device, PLD), a complex programmable logic device (complex programmable logic device, CPLD), an application-specific integrated circuit (application-specific integrated circuit, ASIC), a central processing unit (central processing unit, CPU), a network processor (network processor, NP), or the like. The control unit 402 is configured to generate N first electrical signals. The control unit 402 is configured to transmit the N first electrical signals to the photoelectric composite unit 403. For example, the control unit 402 includes N I/O ports (Input/Output interfaces). Each I/O port is configured to output one first electrical signal.

The photoelectric composite unit 403 includes N ports (which are respectively a port 1, a port 2, and a port 3). Each port is connected to one slave gateway through a photoelectric composite cable. The photoelectric composite unit 403 is configured to receive the N downlink optical sub-signals from the optical splitting unit 401, receive the N first electrical signals from the control unit 402, and combine the N downlink optical sub-signals and the N first electrical signals into the photoelectric composite cable through a conversion adapter. The N downlink optical sub-signals are in one-to-one correspondence with the N first electrical signals. The photoelectric composite unit 403 is configured to perform photoelectric composite on the corresponding first electrical signal and downlink optical sub-signal, and transmit the first electrical signal and the downlink optical sub-signal to the slave gateway through the photoelectric composite cable. Alternatively, the photoelectric composite unit 403 is configured to apply a power disturbance to the downlink optical sub-signal by using the corresponding first electrical signal, and transmit the downlink optical sub-signal to which the power disturbance is applied to the slave gateway through the photoelectric composite cable. In a subsequent example, the optical splitter 102 is described by using an example in which the photoelectric composite unit 403 is configured to transmit the first electrical signal and the downlink optical sub-signal to the slave gateway.

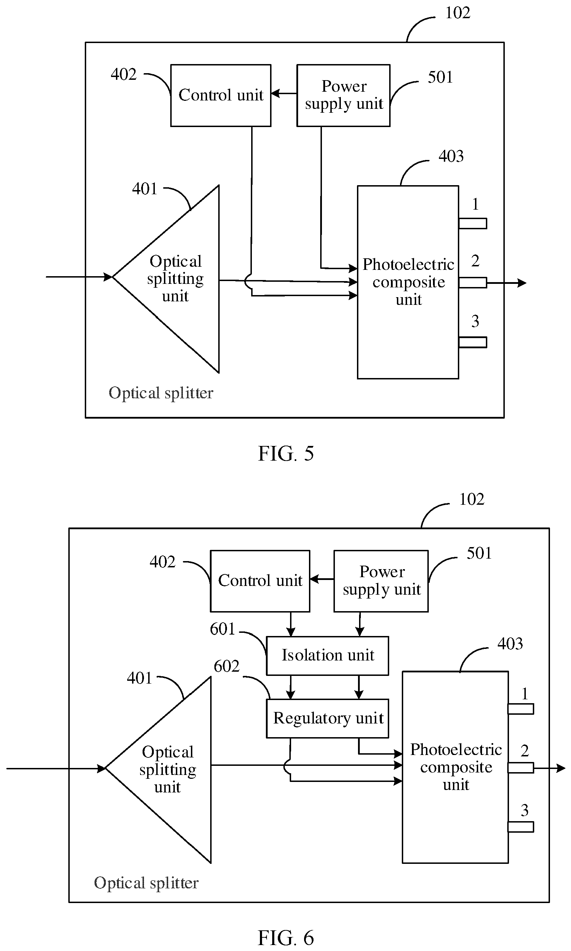

FIG. 5 is a second schematic structural diagram of an optical splitter according to an embodiment of this application. As shown in FIG. 5, based on FIG. 4, the optical splitter further includes a power supply unit 501. The power supply unit 501 is configured to connect to the photoelectric composite unit 403, and supply power to one or more of the N slave gateways through the photoelectric composite cable. The power supply unit 501 may be further configured to supply power to the control unit 402. It should be understood that, in FIG. 5 and a subsequent example, for brevity of the accompanying drawings, only that the power supply unit 501 supplies power to one slave gateway is shown. Similarly, in FIG. 5 and the subsequent example, only one of the N first electrical signals and one downlink optical sub-signal corresponding to the first electrical signal are shown.

FIG. 6 is a third schematic structural diagram of an optical splitter according to an embodiment of this application. As shown in FIG. 6, based on FIG. 5, the optical splitter further includes an isolation unit 601 and a regulatory unit 602. The isolation unit 601 is configured to isolate the power supply unit 501 from the control unit 402. For example, the isolation unit 601 includes a coupling capacitor and an isolation inductor. The coupling capacitor is configured to isolate a high-voltage signal output by the power supply unit 501, to prevent the high-voltage signal from damaging the control unit 402. The isolation inductor is configured to filter the first electrical signal output by the control unit 402, to prevent the first electrical signal from affecting the power supply unit 501. The regulatory unit 602 is located between the control unit 402 and the photoelectric composite cable. The regulatory unit 602 is configured to prevent a circuit from being overloaded, for example, being struck by lightning. The circuit may be the control unit 402 or the power supply unit 501.

It can be learned from the foregoing descriptions of FIG. 4 that the control unit 402 is configured to output the N first electrical signals. During actual application, the N first electrical signals may be modulation signals, or may be direct-out signals. Descriptions are separately provided below.

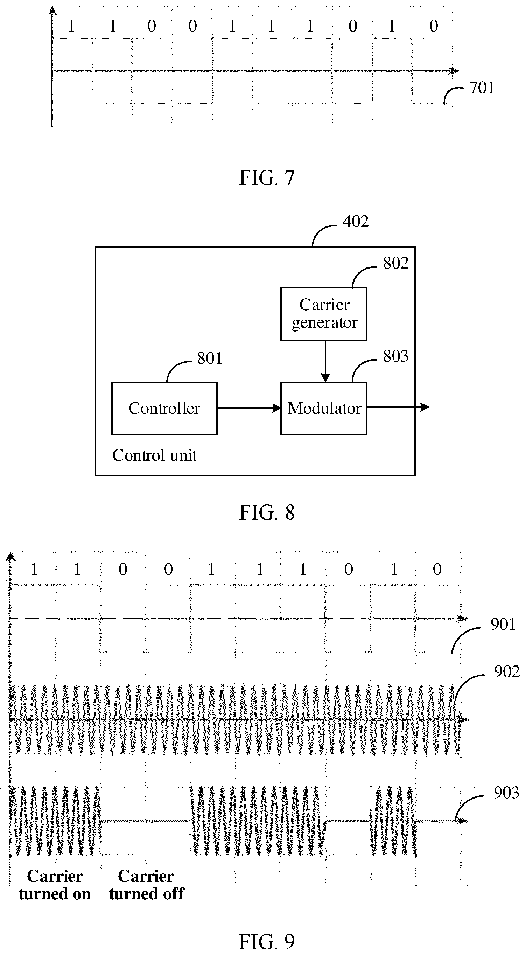

The direct-out signals are electrical signals directly output by the control unit 402 without being modulated. For example, FIG. 7 is a first schematic diagram of a waveform of a first electrical signal according to an embodiment of this application. As shown in FIG. 7, the first electrical signal 701 is a square wave signal. A high point of the square wave signal represents a bit 1. A low point of the square wave signal represents a bit 0. It should be understood that, in FIG. 7, the first electrical signal 701 is a binary bit sequence. During actual application, the first electrical signal 701 may alternatively be a bit sequence in another number system, for example, a quaternary bit sequence.

When the first electrical signal is the modulation signal, the control unit 402 further includes a modulator. FIG. 8 is a first schematic structural diagram of a control unit according to an embodiment of this application. As shown in FIG. 8, the control unit 402 includes a controller 801, a modulator 803, and a carrier generator 802. The carrier generator 802 is configured to generate a carrier signal. For descriptions of the controller 801, refer to the foregoing descriptions of the control unit 402. For example, the controller 801 may be an MCU. The controller 801 is configured to generate N first bit sequences. The modulator 803 is configured to modulate the carrier signal based on the N first bit sequences, to obtain the N first electrical signals. The N first bit sequences are in one-to-one correspondence with the N first electrical signals. In FIG. 8, only one first bit sequence and one first electrical signal are shown. During actual application, the control unit 402 may include N modulators, and each modulator is configured to modulate one first bit sequence to obtain one electrical signal. Alternatively, the control unit 402 modulates the N first bit sequences in a time division manner by using the modulator 803, to obtain the N first electrical signals. 0 and 1 in the N first bit sequences may represent different amplitudes or frequencies of the N first electrical signals. Descriptions are separately provided below.

In a first manner, 0 and 1 in the N first bit sequences represent the different amplitudes of the N first electrical signals. FIG. 9 is a second schematic diagram of a waveform of a first electrical signal according to an embodiment of this application. As shown in FIG. 9, for descriptions of a first bit sequence 901, refer to the foregoing descriptions of the first electrical signal 701. A carrier signal 902 is a sine signal. When the first bit sequence 901 is at a high point (the bit 1), the first electrical signal 903 corresponds to a time point at which a carrier is turned on. When the first bit sequence 901 is at a low point (the bit 0), the first electrical signal 903 corresponds to a time point at which the carrier is turned off. In the first electrical signal 903, an amplitude when the carrier is turned on is different from an amplitude when the carrier is turned off, that is, 0 and 1 in the first bit sequence 901 represent different amplitudes of the first electrical signal.

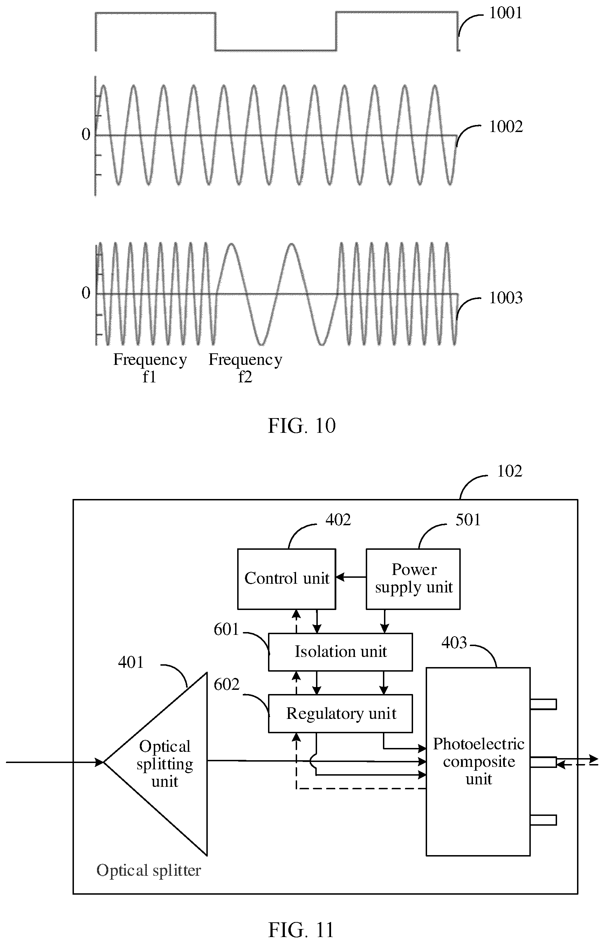

In a second manner, 0 and 1 in the N first bit sequences represent the different frequencies of the N first electrical signals. FIG. 10 is a third schematic diagram of a waveform of a first electrical signal according to an embodiment of this application. As shown in FIG. 10, for descriptions of a first bit sequence 1001, refer to the foregoing descriptions of the first electrical signal 701. A carrier signal 1002 is a sine signal. When the first bit sequence 1001 is at a high point (the bit 1), the first electrical signal 1003 corresponds to a time point at a frequency f1. When the first bit sequence 1001 is at a low point (the bit 0), the first electrical signal 1003 corresponds to a time point at a frequency f2. The frequency f1 and the frequency f2 are different, that is, 0 and 1 in the first bit sequence 1001 represent different frequencies of the first electrical signal.

During actual application, the optical splitter 102 may be further configured to receive N second electrical signals from the N slave gateways. FIG. 11 is a fourth schematic structural diagram of an optical splitter according to an embodiment of this application. As shown in FIG. 11, based on FIG. 6, the photoelectric composite unit 403 is further configured to receive the N second electrical signals from the N slave gateways. The N slave gateways are in one-to-one correspondence with the N second electrical signals. In FIG. 11, only one second electrical signal is shown, and a dashed line with an arrow represents the second electrical signal. In the optical splitter 102, a transmission path of the second electrical signal is opposite to a transmission path of the first electrical signal.

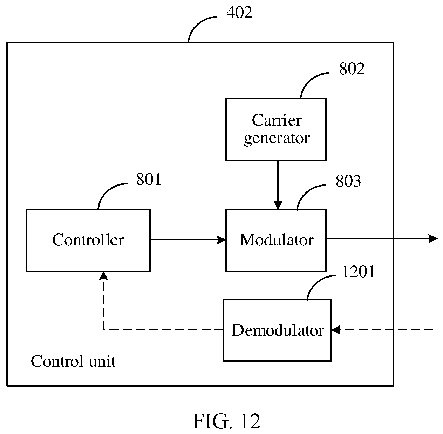

When the second electrical signal is a direct-out signal, the I/O interface of the control unit 402 may directly receive the second electrical signal. When the second electrical signal is a modulation signal, the control unit 402 further includes a demodulator. FIG. 12 is a second schematic structural diagram of a control unit according to an embodiment of this application. As shown in FIG. 12, based on FIG. 8, the control unit 402 further includes a demodulator 1201. The demodulator 1201 is configured to: receive the second electrical signal, demodulate the second electrical signal, and transmit a demodulated electrical signal to the controller 801. For descriptions of the second electrical signal, refer to the foregoing descriptions of the first electrical signal in FIG. 9 or FIG. 10. For descriptions of the demodulated electrical signal, refer to the foregoing descriptions of the first bit sequence in FIG. 9 or FIG. 10.

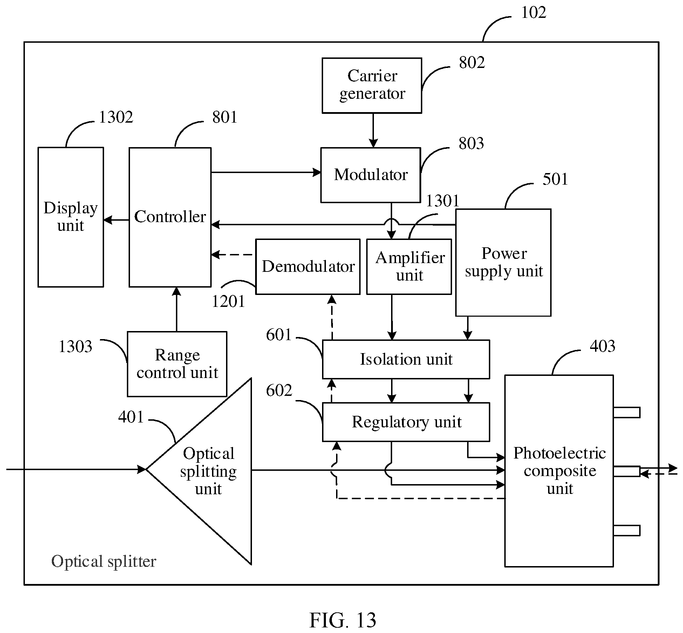

FIG. 13 is a fifth schematic structural diagram of an optical splitter according to an embodiment of this application. As shown in FIG. 13, based on FIG. 11 and FIG. 12, the optical splitter 102 further includes an amplifier unit 1301, a display unit 1302, and a range control unit 1303. The amplifier unit 1301 is configured to amplify N first electrical signals output by the modulator 803. In FIG. 12, only one first electrical signal is shown. The range control unit 1303 may be a rocker switch. Installation personnel may adjust the range control unit 1303 to a corresponding range based on a topology level of the optical splitter 102. The range control unit 1303 is configured to transmit the range control signal to the controller 801. The controller 801 transmits, based on the range control signal, the N first electrical signals that carry cascading identifiers. The controller 801 may be configured to obtain N electrical connection states and/or N optical connection states. The display unit 1302 may be N LED lamps. The display unit 1302 is configured to display the N electrical connection states and/or the N optical connection states of the N slave gateways. For descriptions of another unit in the optical splitter 102, refer to the foregoing descriptions of any one of FIG. 4 to FIG. 12. Details are not described herein again.

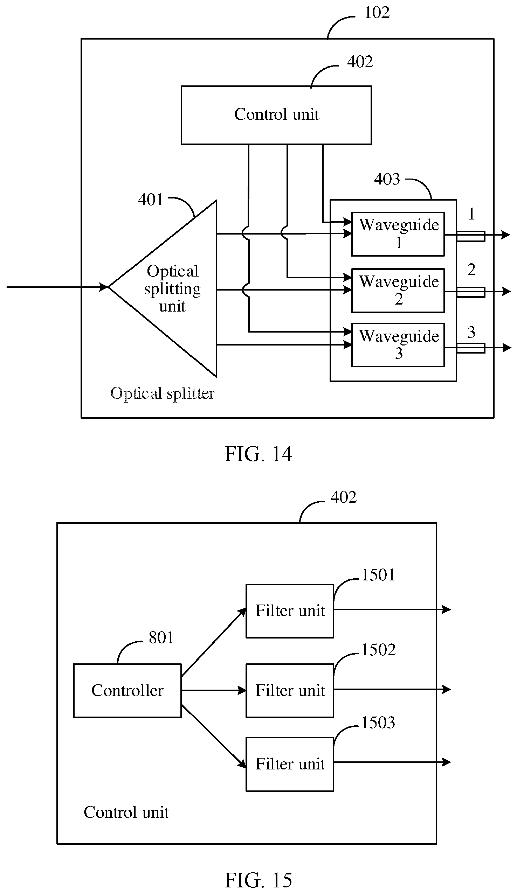

It can be learned from the foregoing descriptions of FIG. 4 that the photoelectric composite unit 403 may be configured to apply a power disturbance to the downlink optical sub-signal by using the corresponding first electrical signal, and transmit the downlink optical sub-signal to which the power disturbance is applied to the slave gateway through the photoelectric composite cable. FIG. 14 is a sixth schematic structural diagram of an optical splitter according to an embodiment of this application. As shown in FIG. 14, based on FIG. 4, the photoelectric composite unit 403 includes N waveguides (which are respectively a waveguide 1, a waveguide 2, and a waveguide 3). The N waveguides are in one-to-one correspondence with the N first electrical signals. Each waveguide is used to apply a power disturbance to one downlink optical sub-signal based on one first electrical signal. The photoelectric composite unit 403 includes the N ports, and each port is configured to output one downlink optical sub-signal to which a power disturbance is applied.

It can be learned from the foregoing descriptions of FIG. 4 that the control unit 402 is configured to output the N first electrical signals. During actual application, the control unit 402 may be configured to generate the N first electrical signals with the different frequencies. The control unit 402 may directly generate the N first electrical signals with the different frequencies, or may obtain the N first electrical signals with the different frequencies based on N electrical signals. For example, FIG. 15 is a third schematic structural diagram of a control unit according to an embodiment of this application. As shown in FIG. 15, the control unit 402 includes the controller 801 and N filter units (which are respectively filter units 1501 to 1503). The controller 801 is configured to generate the N electrical signals, and transmit the N electrical signals to the N filter units. The filter unit may also be referred to as an electrical filter. Each filter unit is configured to receive one electrical signal. The N electrical signals are in one-to-one correspondence with the N filter units. Each filter unit is configured to filter one electrical signal to obtain one first electrical signal. The N filter units are configured to filter the N electrical signals to obtain the N first electrical signals with the different frequencies. The N electrical signals output by the controller 801 may be electrical signals with a same frequency, or may be a $\delta$-$\Sigma$ modulation (delta-sigma modulation, DSM) sequence representing different frequencies. Descriptions are separately provided below.

The N electrical signals are the electrical signals with the same frequency. For example, frequency ranges of the N electrical signals are all from 0 kHz to 1200 kHz. The N first electrical signals include electrical signals 1 to 3. A frequency range of the electrical signal 1 is from 0 kHz to 400 kHz. A frequency range of the electrical signal 2 is from 0 kHz to 800 kHz. A frequency range of the electrical signal 3 is from 0 kHz to 1200 kHz.

The N electrical signals are the DSM sequence. In the DSM sequence, a sine waveform representing a frequency is represented in a form of binary bits 0 and 1 through oversampling and 1-bit quantization. Using second-order DSM as an example, a sine wave with an input $X(z)$ may be converted into a binary bit sequence with an output $Y(z)$ by using a DSM modulation technology. Densities of 0s and 1s represent amplitudes of the sine wave. For example, a larger density of 1s corresponds to a point with a larger amplitude of the input $X(z)$. A larger density of 0s corresponds to a point with a smaller amplitude of the input $X(z)$. A noise power may be moved out of a signal band based on an oversampling technology and the 1-bit quantization, to increase a signal-to-noise ratio. The optical splitter 102 represents different single-frequency information based on different density patterns of 0 and 1. For example, the controller 801 outputs a digital DSM sequence representing a frequency of 100 kHz through one I/O port. The filter unit converts the digital DSM sequence into a 100 kHz sine wave. The controller 701 outputs N DSM sequences representing different frequencies. The N filter units are configured to filter the N DSM sequences to obtain the N first electrical signals.

It should be understood that FIG. 4 to FIG. 6, FIG. 8, or FIG. 11 to FIG. 14 are merely several schematic structural diagrams of the optical splitter 102 according to embodiments of this application. During actual application, a person skilled in the art may adaptively modify a structure of the optical splitter 102 based on a requirement. For example, in FIG. 8, the carrier generator 802 is integrated into the controller 801. The controller 801 is configured to transmit the first bit sequence and the carrier signal to the modulator 803. For another example, in FIG. 4, the optical splitting unit 401 is configured to perform power splitting on the downlink optical signal to obtain four downlink optical sub-signals. The photoelectric composite unit 403 includes three ports and one cascading port. The photoelectric composite unit 403 is configured to output three downlink optical sub-signals through the three ports. The photoelectric composite unit 403 is configured to output one downlink optical sub-signal through the cascading port.

It should be understood that descriptions of the optical splitter 102 are similar to the foregoing descriptions of the optical communication system 100. Therefore, for the descriptions of the optical splitter 102, refer to the foregoing descriptions of any one of FIG. 1 to FIG. 3. For example, the optical splitter 102 is an ODN. For another example, the optical splitter 102 is further configured to receive N uplink optical sub-signals from the N slave gateways in a time division manner. Each uplink optical sub-signal carries one sub-correspondence. The optical splitter 102 is further configured to transmit the N uplink optical sub-signals to the master gateway in a time division manner. The N uplink optical sub-signals carry a first correspondence. Similarly, for descriptions of the optical communication system 100, refer to the foregoing descriptions of any one of FIG. 4 to FIG. 15.

The foregoing describes the optical splitter provided in embodiments of this application. The slave gateway 104 in the N slave gateways is used as an example below to describe the slave gateway provided in embodiments of this application. For descriptions of another slave gateway, refer to the descriptions of the slave gateway 104.

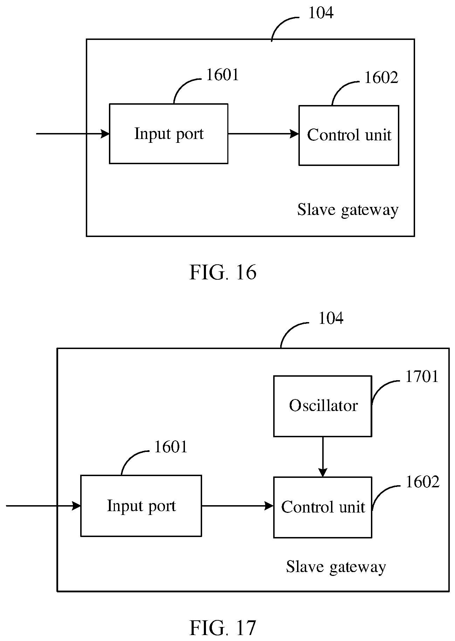

FIG. 16 is a first schematic structural diagram of a slave gateway according to an embodiment of this application. As shown in FIG. 16, the slave gateway 104 includes an input port 1601 and a control unit 1602. The input port 1601 may be a connection port of a photoelectric composite cable. The input port 1601 is connected to one of N ports of an optical splitter 102 through the photoelectric composite cable. N is an integer greater than 0. The input port 1601 is configured to receive a first electrical signal from the optical splitter 102, and transmit the first electrical signal to the control unit 1602.

The control unit 1602 may be a microcontroller unit (microcontroller unit, MCU), a programmable logic device (programmable logic device, PLD), a complex programmable logic device (complex programmable logic device, CPLD), an application-specific integrated circuit (application-specific integrated circuit, ASIC), a central processing unit (central processing unit, CPU), a network processor (network processor, NP), or the like. The control unit 1602 is configured to receive the first electrical signal from the input port 1601, and receive information transmitted by using the first electrical signal. The control unit 1602 may be configured to obtain a sub-correspondence based on the information transmitted by using the first electrical signal. The sub-correspondence represents that the input port 1601 or the slave gateway 104 is connected to a first port of the optical splitter 102. The first port is one of the N ports. In the example of Table 1, the first port is the port 2. For descriptions of the first electrical signal and the sub-correspondence, refer to the foregoing descriptions of the optical communication system 100.

FIG. 17 is a second schematic structural diagram of a slave gateway according to an embodiment of this application. As shown in FIG. 17, based on FIG. 16, the slave gateway 104 further includes an oscillator 1701. The oscillator 1701 is configured to generate oscillatory electrical signals with different frequencies. The control unit 1602 performs correlation operations based on the oscillatory electrical signals with the different frequencies and the first electrical signal, to determine a frequency of the first electrical signal. For example, when an operation result obtained by using an oscillatory electrical signal with a frequency 1 exceeds a threshold, the control unit 1602 determines that the frequency of the first electrical signal is the frequency 1. The frequency of the first electrical signal is used to obtain the sub-correspondence. The sub-correspondence represents that the input port 1601 or the slave gateway 104 is connected to the first port of the optical splitter. In the example of Table 1, the first port is the port 2.

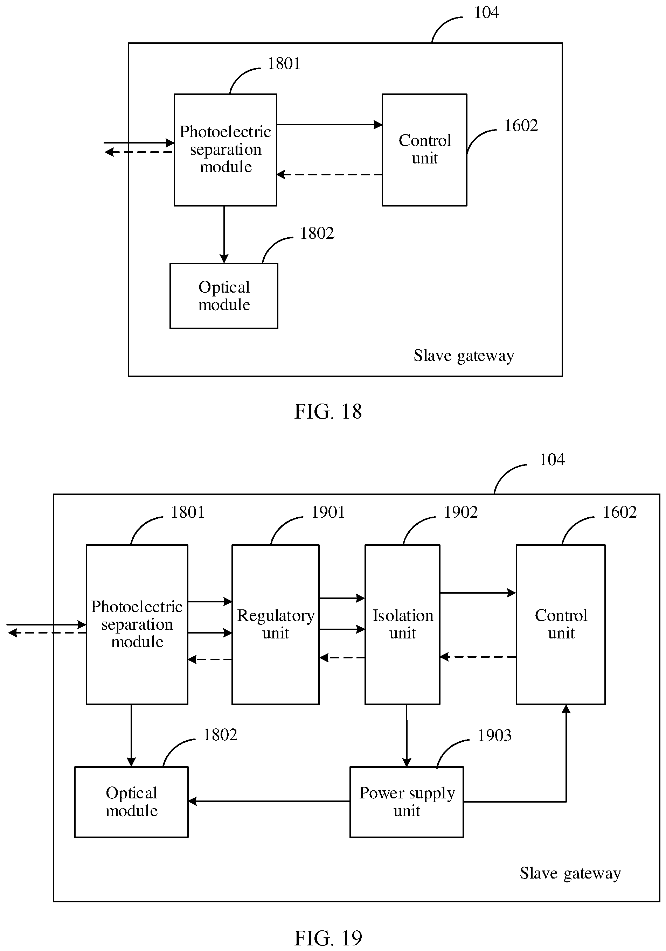

In a subsequent example, the slave gateway 104 in FIG. 16 is used as an example to further describe the slave gateway 104. FIG. 18 is a third schematic structural diagram of a slave gateway according to an embodiment of this application. As shown in FIG. 18, based on FIG. 16, the slave gateway 104 further includes a photoelectric separation module 1801 and an optical module 1802. The input port 1601 in FIG. 16 is an input port of the photoelectric separation module 1801. The photoelectric separation module 1801 is configured to receive the first electrical signal and a downlink optical sub-signal from the optical splitter 102 through a photoelectric composite cable. The photoelectric separation module 1801 is configured to: perform photoelectric separation on the first electrical signal and the downlink optical sub-signal, transmit the first electrical signal to the control unit 1602, and transmit the downlink optical sub-signal to the optical module 1802. The optical module 1802 is configured to demodulate the downlink optical sub-signal to obtain the electrical signal.

During actual application, the optical module 1802 may be an optical transceiver module. In this case, the optical module 1802 may be further configured to transmit an uplink optical sub-signal (not shown) to the photoelectric separation module 1801. Similarly, the control unit 1602 may also be configured to generate a second electrical signal, and transmit the second electrical signal to the photoelectric separation module 1801. In FIG. 18, a dashed line with an arrow represents the second electrical signal. The photoelectric separation module 1801 is further configured to perform photoelectric composite on the uplink optical sub-signal and the second electrical signal, and transmit the uplink optical sub-signal and the second electrical signal to the optical splitter 102 through the photoelectric composite cable. The uplink optical sub-signal or the second electrical signal may carry the sub-correspondence.

FIG. 19 is a fourth schematic structural diagram of a slave gateway according to an embodiment of this application. As shown in FIG. 19, based on FIG. 18, the slave gateway 104 further includes a regulatory unit 1901, an isolation unit 1902, and a power supply unit 1903. The photoelectric separation module 1801 is configured to receive the first electrical signal, the downlink optical sub-signal, and a high-voltage signal from the optical splitter 102 through the photoelectric composite cable. The photoelectric separation module 1801 is configured to perform photoelectric separation on the first electrical signal, the downlink optical sub-signal, and the high-voltage signal, transmit the first electrical signal and the high-voltage signal to the regulatory unit 1901, and transmit the downlink optical sub-signal to the optical module 1802. The regulatory unit 1901 is configured to prevent the control unit 1602 from being overloaded, for example, being struck by lightning. The regulatory unit 1901 is configured to transmit the first electrical signal and the high-voltage signal to the isolation unit 1902. The isolation unit 1902 is configured to transmit the high-voltage signal to the power supply unit 1903, and transmit the first electrical signal to the control unit 1602. The isolation unit 1902 is configured to isolate the power supply unit 1903 from the control unit 1602. The power supply unit 1903 is configured to supply power to the optical module 1802 and the control unit 1602 based on the high-voltage signal.

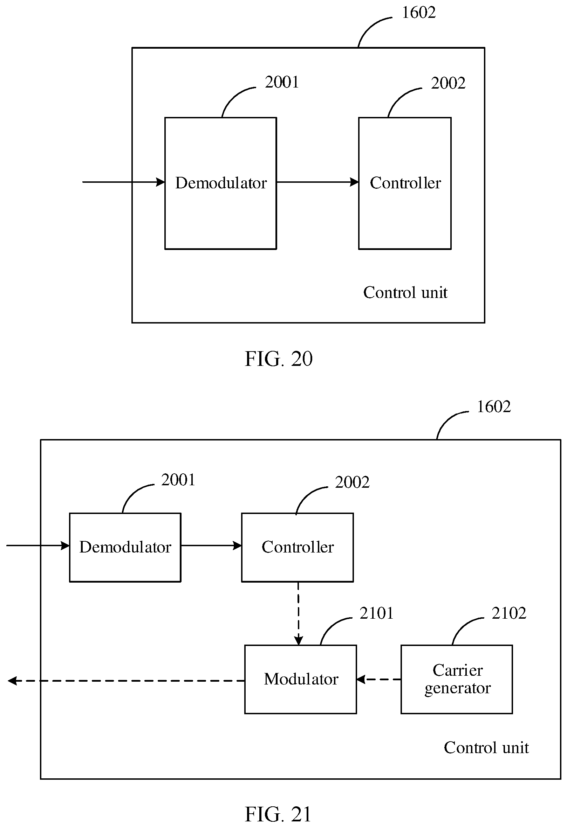

It can be learned from the foregoing descriptions of the optical splitter 102 that the first electrical signal may be a modulation signal or a direct-out signal. When the first electrical signal is the direct-out signal, an I/O interface of the control unit 1602 may directly receive the first electrical signal. When the first electrical signal is the modulation signal, the control unit 1602 further includes a demodulator. FIG. 20 is a first schematic structural diagram of a control unit according to an embodiment of this application. As shown in FIG. 20, the control unit 1602 includes a demodulator 2001 and a controller 2002. The demodulator 2001 is configured to: receive the first electrical signal, demodulate the first electrical signal, and transmit a demodulated electrical signal to the controller 2002. For descriptions of the controller 2002, refer to the foregoing descriptions of the control unit 1602. For example, the controller 2002 may be an MCU. For descriptions of the first electrical signal, refer to the foregoing descriptions of the first electrical signal in FIG. 9 or FIG. 10. For descriptions of the demodulated electrical signal, refer to the foregoing descriptions of the first bit sequence in FIG. 9 or FIG. 10.

The slave gateway 104 may be further configured to transmit the second electrical signal to the optical splitter 102. The second electrical signal may be a modulation signal or a direct-out signal. When the second electrical signal is the direct-out signal, the I/O interface of the control unit 1602 may directly output the second electrical signal. When the second electrical signal is the modulation signal, the control unit 1602 further includes a modulator. FIG. 21 is a second schematic structural diagram of a control unit according to an embodiment of this application. As shown in FIG. 21, based on FIG. 20, the control unit 1602 further includes a modulator 2101 and a carrier generator 2102. The carrier generator 2102 is configured to generate a carrier signal. The controller 2002 is further configured to generate a second bit sequence. The modulator 2101 is configured to modulate the carrier signal based on the second bit sequence, to obtain the second electrical signal.

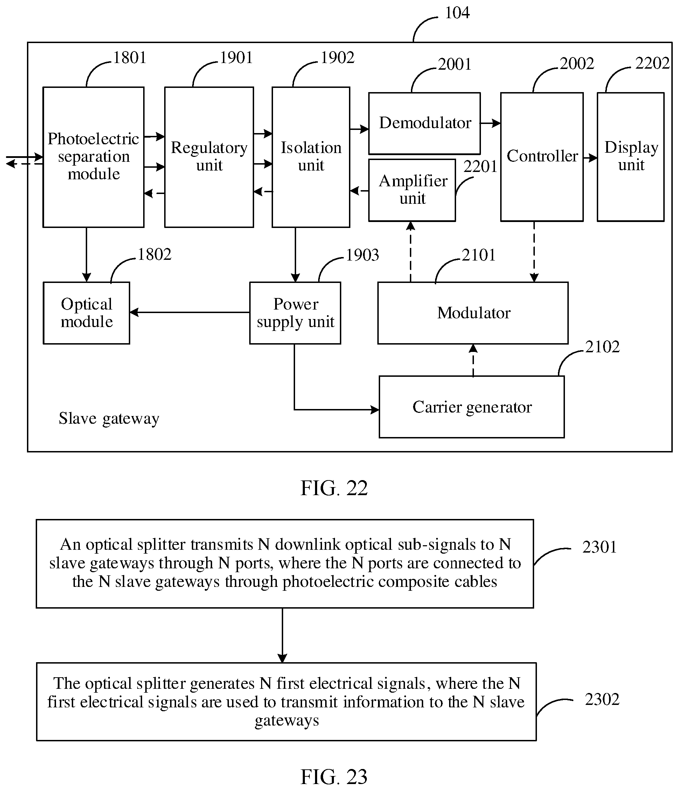

FIG. 22 is a fifth schematic structural diagram of a slave gateway according to an embodiment of this application. As shown in FIG. 22, based on FIG. 19 and FIG. 21, the slave gateway 104 further includes an amplifier unit 2201 and a display unit 2202. The amplifier unit 2201 is configured to amplify the second electrical signal output by the modulator 2101. The display unit 2202 may be an LED lamp. The display unit 2202 is configured to display an electrical connection state and/or an optical connection state between the slave gateway 104 and the optical splitter 102.

It should be understood that FIG. 16 to FIG. 22 are merely several schematic structural diagrams of the slave gateway 104 according to embodiments of this application. During actual application, a person skilled in the art may adaptively modify a structure of the slave gateway 104 based on a requirement. For example, in FIG. 21, the carrier generator 2102 is integrated into the controller 2002. The controller 2002 is configured to transmit the second bit sequence and the carrier signal to the modulator 2101. For another example, in FIG. 18, the optical module 1802 is further configured to transmit the demodulated electrical signal to the control unit 1602. The control unit 1602 is configured to perform data processing, for example, compression, encryption, decryption, storage, or forwarding, on the demodulated electrical signal.

It should be understood that descriptions of the slave gateway 104 are similar to the foregoing descriptions of the optical communication system 100 and the optical splitter 102. Therefore, for the descriptions of the slave gateway 104, refer to the foregoing descriptions of any one of FIG. 1 to FIG. 15. For example, the slave gateway 104 is an ONU or an ONT. For another example, the optical splitter 102 is further configured to receive the uplink optical sub-signal from the slave gateway 104. The uplink optical sub-signal carries the sub-correspondence. Similarly, for descriptions of the optical communication system 100 and the optical splitter 102, refer to the foregoing descriptions of any one of FIG. 16 to FIG. 22.

In another embodiment, the slave gateway 104 or the optical splitter 102 may further include a memory. The memory may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory may be configured to store the sub-correspondence or the information transmitted by using the first electrical signal.

FIG. 23 is a first schematic structural diagram of a detection method according to an embodiment of this application. As shown in FIG. 23, the detection method includes the following steps.

In step 2301, an optical splitter transmits N downlink optical sub-signals to N slave gateways through N ports. The N ports are connected to the N slave gateways through photoelectric composite cables.

A master gateway is connected to the optical splitter through an optical fiber. The optical splitter receives a downlink optical signal from the master gateway. The optical splitter obtains the N downlink optical sub-signals based on the downlink optical signal. For example, an optical splitter 102 performs power splitting on the downlink optical signal to obtain the N downlink optical sub-signals. The optical splitter includes the N ports. N is an integer greater than 0. Each port is connected to one slave gateway through the photoelectric composite cable. The N ports are in one-to-one correspondence with the N slave gateways. The optical splitter outputs the N downlink optical sub-signals through the N ports.

In step 2302, the optical splitter generates N first electrical signals. The N first electrical signals are used to transmit information to the N slave gateways.

The N first electrical signals are in one-to-one correspondence with the N downlink optical sub-signals. For example, each first electrical signal is used to apply a power disturbance to a corresponding downlink optical sub-signal. For another example, the optical splitter outputs the first electrical signal and the corresponding downlink optical sub-signal through a same port. The N first electrical signals are used to transmit the information to the N slave gateways. The information may be used to obtain a first correspondence between the N ports and the N slave gateways. The first correspondence represents a connection relationship between the N slave gateways and the N ports. For example, a port 1 is connected to a slave gateway 103. A port 2 is connected to a slave gateway 104.

It should be understood that descriptions of the detection method are similar to the foregoing descriptions of the optical communication system 100 and the optical splitter 102. Therefore, for the descriptions of the detection method, refer to the foregoing descriptions of any one of FIG. 1 to FIG. 15. For example, the N first electrical signals are modulation signals. For another example, the first electrical signal further includes a cascading identifier. The cascading identifier is used to determine a topology level of the slave gateway.

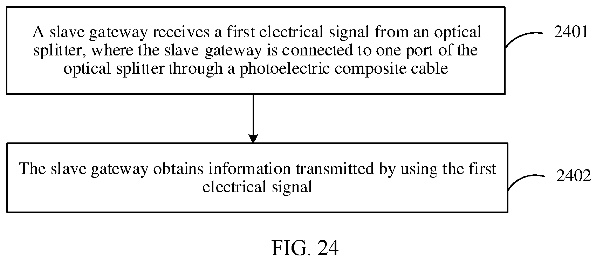

FIG. 24 is a second schematic structural diagram of a detection method according to an embodiment of this application. As shown in FIG. 24, the detection method includes the following steps.

In step 2401, a slave gateway receives a first electrical signal from an optical splitter. The slave gateway is connected to a port of the optical splitter through a photoelectric composite cable.

The slave gateway is connected to one of N ports of the optical splitter through the photoelectric composite cable. N is an integer greater than 0. The slave gateway receives the first electrical signal from the optical splitter through the photoelectric composite cable. The slave gateway may further receive a downlink optical sub-signal from the optical splitter through the photoelectric composite cable. The slave gateway may further transmit an uplink optical sub-signal to the optical splitter through the photoelectric composite cable.

In step 2402, the slave gateway obtains information transmitted by using the first electrical signal.

The slave gateway obtains the information transmitted by using the first electrical signal. The transmitted information may be power disturbance information or a frequency of the first electrical signal. The slave gateway may obtain a sub-correspondence based on the power disturbance information or the frequency. Alternatively, the transmitted information is a first bit sequence carried in the first electrical signal. The first bit sequence may include an identifier of a first port in the N ports. The slave gateway may obtain a sub-correspondence based on the identifier of the first port. The slave gateway may transmit the sub-correspondence to another device. The another device may be the optical splitter or a master gateway.

It should be understood that descriptions of the detection method are similar to the foregoing descriptions of the optical communication system 100 and the slave gateway 104. Therefore, for the descriptions of the detection method, refer to the foregoing descriptions of any one of FIG. 1 to FIG. 3 or FIG. 16 to FIG. 22. For example, the first electrical signal is a modulation signal. For another example, the first electrical signal further includes a cascading identifier. The cascading identifier is used to determine a topology level of the slave gateway.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. An optical splitter, comprising an optical splitting unit, a control unit, and a photoelectric composite unit, wherein

   the optical splitting unit is configured to receive a downlink optical signal from a master gateway, and transmit N downlink optical sub-signals to the photoelectric composite unit, wherein N is an integer greater than 0;

the photoelectric composite unit comprises N ports, wherein the N ports are configured to connect to N slave gateways through photoelectric composite cables respectively, and the N slave gateways are in one-to-one correspondence with the N ports;

the photoelectric composite unit is configured to output the N downlink optical sub-signals through the N ports respectively, wherein the N ports are in one-to-one correspondence with the N downlink optical sub-signals; and

the control unit is configured to generate N first electrical signals, wherein the N first electrical signals are in one-to-one correspondence with the N ports, and the N first electrical signals are used to transmit information to the N slave gateways respectively.

2. The optical splitter according to claim 1, wherein

the control unit is further configured to obtain electrical connection states of the N slave gateways based on the N first electrical signals; and/or

the control unit is further configured to obtain optical connection states of the N slave gateways.

3. The optical splitter according to claim 1, wherein the optical splitter comprises a display unit; and
the display unit is configured to display optical connection states of the N slave gateways and/or electrical connection states of the N slave gateways.

4. The optical splitter according to any one of claims 1 to 3, wherein
the photoelectric composite unit is further configured to output N third electrical signals through the N ports, wherein the N third electrical signals are in one-to-one correspondence with the N ports, and the N third electrical signals are used to obtain length information of the photoelectric composite cable.

5. The optical splitter according to claim 4, wherein

the control unit is further configured to receive N fourth electrical signals through the N ports, wherein the N fourth electrical signals are in one-to-one correspondence with the N third electrical signals; and

the control unit is further configured to obtain the length information of the photoelectric composite cable based on the N third electrical signals and the N fourth electrical signals.

6. The optical splitter according to any one of claims 1 to 5, wherein the optical splitter further comprises a power supply unit;

the power supply unit is configured to supply power to the N slave gateways through the N ports; and
the power supply unit is further configured to supply power to the control unit.

7. The optical splitter according to claim 6, wherein the optical splitter further comprises an isolation unit and/or a regulatory unit;

the isolation unit is configured to isolate the power supply unit from the control unit; and
the regulatory unit is located between the control unit and the N ports, and is configured to prevent the control unit from being overloaded.

8. A slave gateway, comprising an input port and a control unit, wherein

the input port is configured to receive a first electrical signal from an optical splitter, and transmit the first electrical signal to the control unit, and the input port is connected to the optical splitter through a photoelectric composite cable; and

the control unit is configured to obtain information transmitted by using the first electrical signal.

9. The slave gateway according to claim 8, wherein
the control unit is further configured to transmit a second electrical signal to the optical splitter based on the first electrical signal, wherein the second electrical signal is used by the optical splitter to determine an electrical connection state and/or an optical connection state between the optical splitter and the slave gateway.

10. The slave gateway according to claim 8 or 9, wherein

the control unit is further configured to determine the electrical connection state and/or the optical connection state between the optical splitter and the slave gateway based on the first electrical signal;

the slave gateway further comprises a display unit; and

the display unit is configured to display the electrical connection state and/or the optical connection state.

11. The slave gateway according to any one of claims 8 to 10, wherein

the input port is further configured to receive a third electrical signal from the optical splitter; and

the control unit is further configured to transmit a fourth electrical signal to the optical splitter based on the third electrical signal, wherein the fourth electrical signal is used to obtain length information of the photoelectric composite cable.

12. A communication method, comprising:

transmitting, by an optical splitter, N downlink optical sub-signals to N slave gateways through N ports, wherein the N ports are in one-to-one correspondence with the N slave gateways, the N ports are connected to the N slave gateways through photoelectric composite cables, and the N slave gateways are in one-to-one correspondence with the N downlink optical sub-signals, wherein N is an integer greater than 0; and

generating, by the optical splitter, N first electrical signals, wherein the N first electrical signals are in one-to-one correspondence with the N slave gateways, and the N first electrical signals are used to transmit information to the N slave gateways respectively.

13. The communication method according to claim 12, wherein the method further comprises:

obtaining, by the optical splitter, electrical connection states of the N slave gateways based on the N first electrical signals; and/or

obtaining, by the optical splitter, optical connection states of the N slave gateways.

14. The communication method according to claim 13, wherein the method further comprises:

displaying, by the optical splitter, the optical connection states of the N slave gateways and/or the electrical connection states of the N slave gateways.

15. The communication method according to any one of claims 12 to 14, wherein the method further comprises:

outputting, by the optical splitter, N third electrical signals through the N ports, wherein the N third electrical signals are in one-to-one correspondence with the N ports, and the N third electrical signals are used to obtain length information of the photoelectric composite cable.

16. The communication method according to claim 15, wherein the method further comprises:

receiving, by the optical splitter, N fourth electrical signals through the N ports, wherein the N fourth electrical signals are in one-to-one correspondence with the N third electrical signals; and

obtaining, by the optical splitter, the length information of the photoelectric composite cable based on the N third electrical signals and the N fourth electrical signals.

17. A communication method, comprising:

receiving, by a slave gateway, a first electrical signal from an optical splitter, wherein the slave gateway is connected to one port of the optical splitter through a photoelectric composite cable; and

obtaining, by the slave gateway, information transmitted by using the first electrical signal.

18. The communication method according to claim 17, wherein the method further comprises:

transmitting, by the slave gateway, a second electrical signal to the optical splitter, wherein the second electrical signal is used by the optical splitter to determine an electrical connection state and/or an optical connection state between the optical splitter and the slave gateway.

19. The communication method according to claim 17 or 18, wherein the method further comprises:

determining, by the slave gateway, the electrical connection state and/or the optical connection state between the optical splitter and the slave gateway based on the first electrical signal; and

displaying, by the slave gateway, the electrical connection state and/or the optical connection state of the slave gateway.

20. The communication method according to any one of claims 17 to 19, wherein the method further comprises:

receiving, by the slave gateway, a third electrical signal from the optical splitter; and

transmitting, by the slave gateway, a fourth electrical signal to the optical splitter based on the third electrical signal, wherein the fourth electrical signal is used to obtain length information of the photoelectric composite cable.

21. An optical communication system, comprising a master gateway, an optical splitter, and N slave gateways, and N is an integer greater than 0, wherein

the master gateway is connected to the optical splitter through an optical fiber, the optical splitter comprises N ports, the N ports are connected to the N slave gateways through photoelectric composite cables, and the N ports are in one-to-one correspondence with the N slave gateways;

the optical splitter is configured to output N downlink optical sub-signals through the N ports respectively, wherein the N ports are in one-to-one correspondence with the N downlink optical sub-signals; and

the optical splitter is further configured to generate N first electrical signals, wherein the N first electrical signals are in one-to-one correspondence with the N ports, and the N first electrical signals are used to transmit information to the N slave gateways respectively.

22. The optical communication system according to claim 21, wherein

the optical splitter is further configured to obtain electrical connection states of the N slave gateways based on the N first electrical signals; and/or

the optical splitter is further configured to obtain optical connection states of the N slave gateways.

23. The optical communication system according to claim 22, wherein the optical splitter is further configured to display the optical connection states of the N slave gateways and/or the electrical connection states of the N slave gateways.

24. The optical communication system according to any one of claims 21 to 23, wherein the optical splitter is further configured to output N third electrical signals through the N ports, wherein the N third electrical signals are in one-to-one correspondence with the N ports, and the N third electrical signals are used to obtain length information of the photoelectric composite cable.

25. The optical communication system according to claim 24, wherein

the N slave gateways are configured to transmit N fourth electrical signals to the optical splitter, wherein the N fourth electrical signals are in one-to-one correspondence with the N third electrical signals; and

the optical splitter is further configured to obtain the length information of the photoelectric composite cable based on the N third electrical signals and the N fourth electrical signals.

100

101

Master gateway

102

Optical splitter

Slave gateway — 103

Slave gateway — 104

Slave gateway — 105

FIG. 1

100

101

Master gateway

102

Optical splitter

Slave gateway — 103

Slave gateway — 104

Slave gateway — 105

Network diagnosis apparatus — 201

FIG. 2

FIG. 3

FIG. 4

402 Control unit

Power
supply unit 501

102

401 Optical
splitting
unit

403 Photoelectric
composite
unit

1

2

3

Optical splitter

FIG. 5

402 Control unit

Power
supply unit 501

102

601 Isolation unit

602

401 Optical
splitting
unit

Regulatory unit

403 Photoelectric
composite
unit

1

2

3

Optical splitter

FIG. 6

FIG. 7

FIG. 8

FIG. 9

Frequency
f1

Frequency
f2

FIG. 10

FIG. 11

FIG. 12

FIG. 13

102

FIG. 14

402

FIG. 15

FIG. 16

FIG. 17

104

1801

Photoelectric separation module

Control unit

1602

Optical module

1802

Slave gateway

FIG. 18

104

1801

Photoelectric separation module

1901

Regulatory unit

1902

Isolation unit

1602

Control unit

1802

Optical module

1903

Power supply unit

Slave gateway

FIG. 19

FIG. 20

FIG. 21

FIG. 22

FIG. 23

A slave gateway receives a first electrical signal from an optical splitter, where the slave gateway is connected to one port of the optical splitter through a photoelectric composite cable — 2401

The slave gateway obtains information transmitted by using the first electrical signal — 2402

FIG. 24

# EP 4 576 811 A1

## INTERNATIONAL SEARCH REPORT

| International application No. |
|---|
| **PCT/CN2023/120659** |

### A.   CLASSIFICATION OF SUBJECT MATTER

H04Q11/00(2006.01)i

According to International Patent Classification (IPC) or to both national classification and IPC

### B.   FIELDS SEARCHED

Minimum documentation searched (classification system followed by classification symbols)

IPC:H04W; H04L; H04Q

Documentation searched other than minimum documentation to the extent that such documents are included in the fields searched

Electronic data base consulted during the international search (name of data base and, where practicable, search terms used)

CJFD, CNTXT, ENTXT, ENTXTC, WPABS, WPABSC, 3GPP, IEEE: 主网关, 从网关, 光线路终端, 光网络终端, 分光器, 分光单元, 分光模块, 光分路器, 光分配网络, 光网络终端, 端口, 对应, 电信号, 光电复合缆, primary gateway, secondary gateway, OLT, ODN, ONU, ONT, splitter, port, corresponding, electrical signal, photoelectric composite cable

### C.   DOCUMENTS CONSIDERED TO BE RELEVANT

| Category* | Citation of document, with indication, where appropriate, of the relevant passages | Relevant to claim No. |
|---|---|---|
| Y | CN 112653939 A (HUAWEI TECHNOLOGIES CO., LTD.) 13 April 2021 (2021-04-13) description, paragraphs [0093]-[0258] | 1-7, 12-16, 21-25 |
| Y | WO 2022222483 A1 (HUAWEI TECHNOLOGIES CO., LTD.) 27 October 2022 (2022-10-27) description, paragraphs [0039]-[0102] | 1-7, 12-16, 21-25 |
| X | WO 2022222483 A1 (HUAWEI TECHNOLOGIES CO., LTD.) 27 October 2022 (2022-10-27) description, paragraphs [0039]-[0102] | 8-11, 17-20 |
| PX | CN 116684763 A (HUAWEI TECHNOLOGIES CO., LTD.) 01 September 2023 (2023-09-01) description, paragraphs [0063]-[0154] | 1-25 |
| PX | CN 219659848 U (HUAWEI TECHNOLOGIES CO., LTD.) 08 September 2023 (2023-09-08) description, paragraphs [0043]-[0130] | 1-25 |
| A | WO 2021077890 A1 (HUAWEI TECHNOLOGIES CO., LTD.) 29 April 2021 (2021-04-29) entire document | 1-25 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 November 2023** | **15 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/120659** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 216646874 U (SHENZHEN FEISU INNOVATION TECHNOLOGY CO., LTD.) 31 May 2022 (2022-05-31)<br>entire document | 1-25 |

Form PCT/ISA/210 (second sheet) (July 2022)

**INTERNATIONAL SEARCH REPORT**
Information on patent family members

International application No.

**PCT/CN2023/120659**

| Patent document cited in search report | | | Publication date (day/month/year) | Patent family member(s) | | | Publication date (day/month/year) |
|---|---|---|---|---|---|---|---|
| CN | 112653939 | A | 13 April 2021 | None | | | |
| WO | 2022222483 | A1 | 27 October 2022 | None | | | |
| CN | 116684763 | A | 01 September 2023 | None | | | |
| CN | 219659848 | U | 08 September 2023 | None | | | |
| WO | 2021077890 | A1 | 29 April 2021 | BR | 112022007701 | A2 | 12 July 2022 |
| | | | | KR | 20220084123 | A | 21 June 2022 |
| | | | | EP | 4037332 | A1 | 03 August 2022 |
| | | | | EP | 4037332 | A4 | 01 March 2023 |
| | | | | AU | 2020371761 | A1 | 19 May 2022 |
| | | | | MX | 2022004841 | A | 18 May 2022 |
| | | | | JP | 2022553365 | A | 22 December 2022 |
| | | | | US | 2022247507 | A1 | 04 August 2022 |
| | | | | CA | 3155489 | A1 | 29 April 2021 |
| CN | 216646874 | U | 31 May 2022 | None | | | |

Form PCT/ISA/210 (patent family annex) (July 2022)

**EP 4 576 811 A1**

**Patent documents cited in the description**

- CN 202211559572